# EUROPEAN PATENT APPLICATION

(11) **EP 4 412 180 A1**
(43) Date of publication of application: **07.08.2024**
(21) Application number: 22897357.4
(22) Date of filing: 26.09.2022
(51) Int. Cl.: H04L 65/1066

(54) **METHOD AND APPARATUS FOR DETERMINING S-CSCF**

(30) Priority: 25.11.2021 CN 202111411602
(71) Applicant: Huawei Technologies Co., Ltd., Shenzhen, Guangdong 518129 (CN)
(72) Inventor: JIA, Yigang, Shenzhen, Guangdong 518129 (CN); LIU, Kunliang, Shenzhen, Guangdong 518129 (CN); SUN, Yidong, Shenzhen, Guangdong 518129 (CN); HUANG, Zexu, Shenzhen, Guangdong 518129 (CN)
(74) Representative: Pfenning, Meinig & Partner mbB
(86) International application number: PCT/CN2022/121388
(87) International publication number: WO 2023/093271

(57) **Abstract**

A method and an apparatus for determining an S-CSCF are provided, to avoid a problem that a target terminal fails to be registered or called when access to a data management device fails, thereby helping improve reliability of a communication system. In this application, the method includes: an I-CSCF determines that access to a data management device fails, and sends a first obtaining request to a first device; and the first device sends a first obtaining response to the I-CSCF based on the first obtaining request, where the first obtaining response may be used to indicate address information of a target S-CSCF, and the target S-CSCF is an S-CSCF with which a target terminal is registered. The first device may be the target S-CSCF or a backup device.

## Description

### CROSS-REFERENCE TO RELATED APPLICATIONS

This application claims priority to Chinese Patent Application No. 202111411602.2, filed with the China National Intellectual Property Administration on November 25, 2021 and entitled "METHOD AND APPARATUS FOR DETERMINING S-CSCF", which is incorporated herein by reference in its entirety.

### TECHNICAL FIELD

This application relates to the field of communication technologies, and in particular, to a method and an apparatus for determining a serving-call session control function (serving-call session control function, S-CSCF).

### BACKGROUND

A data management device (for example, a home subscriber server (home subscriber server, HSS) in 4G or unified data management (unified data management, UDM) in 5G) may be configured to store user data of a terminal. The user data is, for example, subscription data or identity data.

The data management device may provide related data for functions/network elements in an IP multimedia subsystem (IP multimedia subsystem, IMS) domain in a terminal register procedure, a terminal call procedure, or the like. For example, in a terminal call procedure, after a calling terminal initiates an invite message for a called terminal (also referred to as a target terminal) to an interrogation-call session control function (interrogation-call session control function, I-CSCF), the I-CSCF may send a location information request (location information request, LIR) message to the data management device based on the invite message, to request to obtain address information of a target S-CSCF corresponding to the target terminal. Correspondingly, the data management device sends a location information answer (location information answer, LIA) message to the I-CSCF, where the LIA message carries the address information of the target S-CSCF.

However, when access to the data management device fails, the I-CSCF cannot obtain the address information of the target S-CSCF from the data management device, in other words,

### SUMMARY

This application provides a method and an apparatus for determining an S-CSCF, to avoid a problem that a target terminal fails to be registered or called when access to a data management device fails, thereby helping improve reliability of a communication system.

According to a first aspect, this application provides a method for determining an S-CSCF. The method may be performed by an I-CSCF.

In a possible implementation, the method includes: the I-CSCF determines that access to a data management device fails, and sends a first obtaining request to a first device; and the I-CSCF receives a first obtaining response of the first device, where the first obtaining response indicates address information of a target S-CSCF, and the target S-CSCF is an S-CSCF with which a target terminal is registered. For example, the data management device may be UDM or an HSS. For example, the first device may be the target S-CSCF or a backup device.

In the foregoing technical solution, when determining that access to the data management device fails, the I-CSCF may send the first obtaining request to the first device. Further, the I-CSCF may receive the first obtaining response from the first device, where the first obtaining response may be used to indicate the address information of the target S-CSCF, so that the I-CSCF can obtain the address information of the target S-CSCF, and perform a register procedure of the target terminal or a call procedure of the target terminal based on the address information of the target S-CSCF. This avoids a problem that the target terminal fails to be registered or called when access to the data management device fails, thereby helping improve reliability of a communication system.

In a possible implementation, the first device is the target S-CSCF, and the target S-CSCF is any S-CSCF in an S-CSCF set corresponding to the I-CSCF; and the first obtaining response includes an indication for determining that the first device is the target S-CSCF, or includes the address information of the target S-CSCF. In the foregoing technical solution, if the first device is the target S-CSCF, the first device may indicate, to the I-CSCF by using the indication for determining that the first device is the target S-CSCF or the first obtaining response including the address information of the target S-CSCF, that the first device is the target S-CSCF, so that the I-CSCF determines the target S-CSCF.

In a possible implementation, the method further includes: the I-CSCF sends a second obtaining request to a second device, where the second device is another S-CSCF other than the target S-CSCF in the S-CSCF set corresponding to the I-CSCF; and the I-CSCF receives an indication from the second device for denying that the second device is the target S-CSCF; or the I-CSCF receives no address information of the target S-CSCF from the second device. In the foregoing technical solution, the I-CSCF may determine, in a polling manner, the target S-CSCF from the S-CSCF set corresponding to the I-CSCF. When the second device (an S-CSCF) is not the target S-CSCF, the second device may indicate, to the I-CSCF by sending the indication for denying that the second device is the target S-CSCF to the I-CSCF or making no response to the I-CSCF, that the second device is not the target S-CSCF, so that the I-CSCF selects a new S-CSCF from the S-CSCF set and determines whether the new S-CSCF is the target S-CSCF.

In a possible implementation, that the I-CSCF sends a first obtaining request to a first device includes: the I-CSCF sends the first obtaining request to a plurality of S-CSCFs included in the S-CSCF set; and that the I-CSCF receives a first obtaining response of the first device includes: the I-CSCF receives the first obtaining response of the target S-CSCF in the plurality of S-CSCFs. In a possible implementation, the method further includes: the I-CSCF receives a response from another S-CSCF other than the target S-CSCF in the plurality of S-CSCFs for denying that the another S-CSCF is the target S-CSCF; or the I-CSCF receives no address information of the target S-CSCF from the another S-CSCF other than the target S-CSCF in the plurality of S-CSCFs. In the foregoing technical solution, the I-CSCF sends the obtaining request to the plurality of S-CSCFs in the S-CSCF set in a multicast manner or a broadcast manner, thereby helping improve efficiency of determining the target S-CSCF by the I-CSCF.

In a possible implementation, the first device is a backup device, and an identifier of the target terminal and the address information of the target S-CSCF are correspondingly stored in the backup device. The first obtaining response includes the address information of the target S-CSCF. In the foregoing technical solution, the backup device is disposed in the communication system, and the backup device may store a correspondence between an identifier of a terminal and address information of an S-CSCF. After determining that access to the data management device fails, the I-CSCF may query the address information of the target S-CSCF corresponding to the target terminal from the backup device, to avoid a problem that the target terminal fails to be registered or called when access to the data management device fails, thereby helping improve reliability of the communication system.

In a possible implementation, the method further includes: when access to the data management device is normal, the I-CSCF sends the identifier of the target terminal and the address information of the target S-CSCF to the backup device. In the foregoing technical solution, the correspondence in the backup device may be stored by the I-CSCF in the backup device when access to the data management device is normal.

In a possible implementation, the method further includes: after receiving a deregister request of the target terminal, the I-CSCF sends a delete instruction to the backup device after preset deregister duration expires, to instruct to delete the identifier of the target terminal and the address information of the target S-CSCF that are correspondingly stored in the backup device. In the foregoing technical solution, after receiving the deregister request of the target terminal, the I-CSCF does not immediately delete a correspondence in the backup device, but deletes the correspondence after the preset deregister duration expires. Therefore, when the target terminal is powered off or is in an airplane mode, although the target terminal has initiated a deregister procedure, the correspondence is still retained in the backup device, so that the I-CSCF can still continue to determine the address information of the target S-CSCF, thereby helping the I-CSCF successfully call the target terminal.

In a possible implementation, that the I-CSCF determines that access to a data management device fails includes: the I-CSCF sends a query request to the data management device; and after sending the query request to the data management device, the I-CSCF determines, within preset query duration, that no address information of the target S-CSCF from the data management device is received; or the I-CSCF receives a query failure response of the data management device.

According to a second aspect, this application provides a method for determining an S-CSCF. The method may be performed by a first device. For example, the first device may be a target S-CSCF or a backup device.

In a possible implementation, the method includes: the first device receives a first obtaining request from an I-CSCF, where the first obtaining request indicates that access to a data management device fails; and the first device sends a first obtaining response to the I-CSCF based on the first obtaining request, where the first obtaining response indicates address information of a target S-CSCF, and the target S-CSCF is an S-CSCF with which a target terminal is registered.

In a possible implementation, the first device is the target S-CSCF; and that the first device sends a first obtaining response to the I-CSCF based on the first obtaining request includes: the first device determines, based on an identifier of the target terminal in the first obtaining request, that user data of the target terminal is stored in the first device, and sends the first obtaining response to the I-CSCF.

In a possible implementation, the method further includes: after receiving a deregister request of the target terminal, the first device clears, after preset deregister duration expires, the user data stored in the first device. In the foregoing technical solution, after receiving the deregister request of the target terminal, the first device does not immediately delete a correspondence in the first device, but deletes the correspondence after the preset deregister duration expires. Therefore, when the target terminal is powered off or is in an airplane mode, although the target terminal has initiated a deregister procedure, the correspondence is still retained in the first device, so that the I-CSCF can still continue to determine the address information of the target S-CSCF based on the user data in the first device, thereby helping the I-CSCF successfully call the target terminal.

In a possible implementation, the first device is a backup device, and an identifier of the target terminal and the address information of the target S-CSCF are correspondingly stored in the backup device; and that the first device sends a first obtaining response to the I-CSCF based on the first obtaining request includes: the first device sends, to the I-CSCF based on the identifier of the target terminal in the first obtaining request, the first obtaining response that carries the address information of the target S-CSCF.

In a possible implementation, the method further includes: when access to the data management device is normal, the first device receives the identifier of the target terminal and the address information of the target S-CSCF from the I-CSCF or the target S-CSCF; and the first device correspondingly stores the identifier of the target terminal and the address information of the target S-CSCF.

In a possible implementation, the method further includes: the first device receives a delete instruction from the I-CSCF or the target S-CSCF; and the first device deletes, according to the delete instruction, the identifier of the target terminal and the address information of the target S-CSCF that are correspondingly stored in the first device.

For technical effects that can be achieved in the second aspect, refer to the descriptions of the beneficial effects in the first aspect. Details are not described herein again.

According to a third aspect, this application provides a method for determining an S-CSCF. The method is applicable to a system including a proxy device, and the proxy device is located in a communication connection between an I-CSCF and a data management device. The method may be performed by the proxy device.

In a possible implementation, the method includes: the proxy device determines that access to the data management device fails; the proxy device obtains address information of a target S-CSCF from a local storage, where the target S-CSCF is an S-CSCF with which a target terminal is registered; and the proxy device sends the address information of the target S-CSCF to the I-CSCF.

In the foregoing technical solution, if the proxy device determines that access to the data management device fails, the proxy device may locally obtain the address information of the target S-CSCF corresponding to the target terminal, and send the address information of the target S-CSCF to the I-CSCF. Correspondingly, the I-CSCF may obtain the address information of the target S-CSCF, and perform a register or call procedure of the target terminal based on the address information of the target S-CSCF. This avoids a problem that the target terminal fails to be registered or called when access to the data management device fails, thereby helping improve reliability of a communication system.

In a possible implementation, that the proxy device determines that access to the data management device fails includes: the proxy device forwards a query request from the I-CSCF to the data management device; and after preset query duration expires, the proxy device determines that no address information of the target S-CSCF from the data management device is received; or the proxy device receives a query failure response of the data management device. In the foregoing technical solution, the proxy device may determine that access to the data management device fails, and then send the address information of the target S-CSCF to the I-CSCF.

In a possible implementation, the method further includes: when access to the data management device is normal, the proxy device receives an identifier of the target terminal and the address information of the target S-CSCF from the data management device; and the proxy device correspondingly stores the identifier of the target terminal and the address information of the target S-CSCF. In the foregoing technical solution, when forwarding signaling between the data management device and the S-CSCF or forwarding signaling between the data management device and the I-CSCF, the proxy device may obtain a correspondence between the identifier of the target terminal and the address information of the target S-CSCF from the forwarded signaling, and the I-CSCF or the target S-CSCF does not need to send the correspondence to the proxy device, thereby helping reduce signaling overheads.

According to a fourth aspect, an embodiment of this application provides a communication apparatus. The apparatus has a function of implementing the I-CSCF in any one of the first aspect or the possible implementations of the first aspect.

The communication apparatus may alternatively have a function of implementing the first device in any one of the second aspect or the possible implementations of the second aspect. The first device may be a target S-CSCF or a backup device.

The communication apparatus may alternatively have a function of implementing the proxy device in any one of the third aspect or the possible implementations of the third aspect.

The function of the communication apparatus may be implemented by hardware, or may be implemented by hardware by executing corresponding software. The hardware or the software includes one or more modules, units, or means (means) corresponding to the function.

In a possible implementation, a structure of the apparatus includes a processing module and a transceiver module. The processing module is configured to support the apparatus in performing a corresponding function of the I-CSCF in any one of the first aspect or the implementations of the first aspect, performing a corresponding function of the first device in any one of the second aspect or the implementations of the second aspect, or performing a corresponding function of the proxy device in any one of the third aspect or the implementations of the third aspect. The transceiver module is configured to support communication between the apparatus and another communication device. For example, when the apparatus is an I-CSCF, the transceiver module may receive a first obtaining response from the first device. The communication apparatus may further include a storage module. The storage module is coupled to the processing module, and stores program instructions and data that are necessary for the apparatus. As an example, the processing module may be a processor, the communication module may be a transceiver, and the storage module may be a memory. The memory may be integrated with the processor, or may be disposed separately from the processor.

In another possible implementation, a structure of the apparatus includes a processor, and may further include a memory. The processor is coupled to the memory, and may be configured to execute computer program instructions stored in the memory, to enable the apparatus to perform the method in any one of the first aspect or the possible implementations of the first aspect, perform the method in any one of the second aspect or the possible implementations of the second aspect, or perform the method in any one of the third aspect or the possible implementations of the third aspect. Optionally, the apparatus further includes a communication interface, and the processor is coupled to the communication interface. When the apparatus is the first device or the I-CSCF device, the communication interface may be a transceiver or an input/output interface. When the apparatus is a chip included in the first device or a chip included in the I-CSCF device, the communication interface may be an input/output interface of the chip. Optionally, the transceiver may be a transceiver circuit, and the input/output interface may be an input/output circuit.

According to a fifth aspect, an embodiment of this application provides a chip system, including a processor and a memory. The processor is coupled to the memory. The memory is configured to store a program or instructions. When the program is or the instructions are executed by the processor, the chip system is enabled to implement the method in any one of the first aspect or the possible implementations of the first aspect, implement the method in any one of the second aspect or the possible implementations of the second aspect, or perform the method in any one of the third aspect or the possible implementations of the third aspect.

Optionally, the chip system further includes an interface circuit. The interface circuit is configured to exchange a code instruction to the processor.

Optionally, there may be one or more processors in the chip system, and the processor may be implemented by hardware or may be implemented by software. When the processor is implemented by hardware, the processor may be a logic circuit, an integrated circuit, or the like. When the processor is implemented by software, the processor may be a general-purpose processor and implemented by reading software code stored in the memory.

Optionally, there may also be one or more memories in the chip system. The memory may be integrated with the processor, or may be disposed separately from the processor. For example, the memory may be a non-transitory memory, for example, a read-only memory ROM. The memory and the processor may be integrated on a same chip, or may be separately disposed on different chips.

According to a sixth aspect, an embodiment of this application provides a computer-readable storage medium. The computer-readable storage medium stores a computer program or instructions. When the computer program is or the instructions are executed, a computer is enabled to perform the method in any one of the first aspect or the possible implementations of the first aspect, perform the method in any one of the second aspect or the possible implementations of the second aspect, or perform the method in any one of the third aspect or the possible implementations of the third aspect.

According to a seventh aspect, an embodiment of this application provides a computer program product. When a computer reads and executes the computer program product, the computer is enabled to perform the method in any one of the first aspect or the possible implementations of the first aspect, perform the method in any one of the second aspect or the possible implementations of the second aspect, or perform the method in any one of the third aspect or the possible implementations of the third aspect.

According to an eighth aspect, an embodiment of this application provides a communication system. The communication system includes the I-CSCF in any one of the first aspect or the possible implementations of the first aspect and the first device in any one of the second aspect or the possible implementations of the second aspect. The first device may be a target S-CSCF or a backup device.

For technical effects that can be achieved in any one of the fourth aspect to the eighth aspect, refer to the descriptions of the beneficial effects in the first aspect, the descriptions of the beneficial effects in the second aspect, or the descriptions of the beneficial effects in the third aspect. Details are not described herein again.

### BRIEF DESCRIPTION OF DRAWINGS

FIG. 1 is a schematic diagram of an architecture of a first communication system;
FIG. 2 is a schematic diagram of an architecture of a second communication system;
FIG. 3 is a schematic diagram of an architecture of a third communication system;
FIG. 4 is a schematic diagram of a terminal register procedure;
FIG. 5 is a schematic diagram of a third-party register procedure;
FIG. 6 is a schematic diagram of a terminal call procedure;
FIG. 7 is a schematic flowchart of a method for determining a target S-CSCF by an I-CSCF when access to UDM fails according to this application;
FIG. 8 is a schematic flowchart of a first method for determining a target S-CSCF by an I-CSCF in terminal registration according to this application;
FIG. 9 is a schematic flowchart of a second method for determining a target S-CSCF by an I-CSCF in terminal registration according to this application;
FIG. 10 is a schematic flowchart of a third method for determining a target S-CSCF by an I-CSCF in terminal registration according to this application;
FIG. 11 is a schematic flowchart of a method for storing a correspondence by a backup device according to this application;
FIG. 12 is a schematic flowchart of another method for determining a target S-CSCF by an I-CSCF when access to UDM fails according to this application;
FIG. 13 is a schematic flowchart of a fourth method for determining a target S-CSCF by an I-CSCF in terminal registration according to this application;
FIG. 14 is a schematic flowchart of a method for storing a correspondence by an SCP according to this application;
FIG. 15 is a schematic diagram of a structure of an apparatus for determining a target S-CSCF according to this application; and
FIG. 16 is a schematic diagram of a structure of another apparatus for determining a target S-CSCF according to this application.

### DESCRIPTION OF EMBODIMENTS

The following describes in detail embodiments of this application with reference to accompanying drawings.

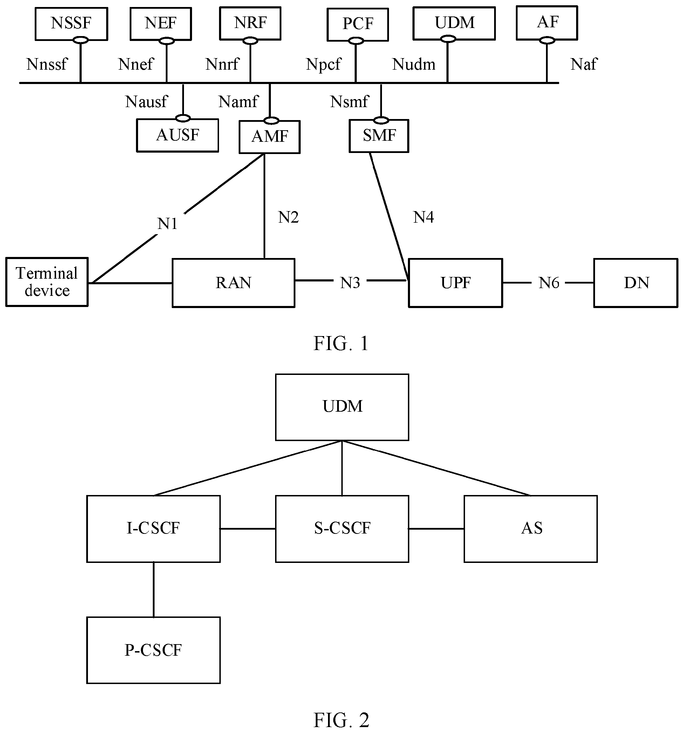

FIG. 1 is a schematic diagram of an architecture of a communication system used in a communication method according to this application. The communication system mainly includes the following network functions and entities: a terminal device (user equipment, UE), a radio access network (radio access network, RAN) device, a user plane function (user plane function, UPF), a data network (data network, DN), an access and mobility management function (access and mobility management function, AMF), a session management function (session management function, SMF), a network exposure function (network exposure function, NEF), a policy control function (policy control function, PCF), an application function (application function, AF), and a network slice selection function (network slice selection function, NSSF), an authentication server function (authentication server function, AUSF), unified data management (unified data management, UDM), a network repository function (network repository function, NRF), and a unified data repository (unified data repository, UDR) function.

Further, FIG. 1 shows interaction relationships between the network functions and entities and corresponding interfaces. For example, the terminal device and the AMF may interact with each other through an N1 interface, and an interaction message is referred to as an N1 message. Some interfaces may be implemented through service-oriented interfaces.

A data flow of a user may be transmitted by using a protocol data unit session (protocol data unit session, PDU) established between the terminal device and the DN. Specifically, the data flow may be transmitted via a radio access network device and the UPF.

The network functions and entities are explained as follows:
Terminal device: The terminal device may be user equipment, a handheld terminal, a notebook computer, a cellular phone, a smartphone, a tablet computer, a handheld device, an augmented reality (augmented reality, AR) device, a virtual reality (virtual reality, VR) device, a machine type communication terminal, or another device that can access a network. The terminal device and the radio access network device communicate with each other by using an air interface technology (for example, a new radio (new radio, NR) or long term evolution (long term evolution, LTE) technology). The terminal device and a terminal device may alternatively communicate with each other by using an air interface technology (for example, an NR or LTE technology). In the internet of vehicles communication, a vehicle-mounted communication terminal may be used as a terminal device, and a roadside unit (roadside unit, RSU) may also be used as a terminal device. A communication terminal mounted on an unmanned aerial vehicle may also be considered as a terminal device. In this application, the terminal device may also be referred to as a terminal or UE.
Radio access network device: The radio access network device is mainly responsible for functions such as radio resource management, quality of service management, and data compression and encryption on an air interface side. The radio access network device may include various forms of base stations, such as a macro base station, a micro base station, a relay station, and an access point. In systems using different radio access technologies, a device having a function of a base station may have different names. For example, in an NR system, the device is referred to as a gNB.
AMF: The AMF is a core network element, and is mainly responsible for functions such as access control, mobility management, attachment and detachment, and gateway selection. When providing a service for a session of the terminal device, the AMF may specifically provide a storage resource of a control plane for the session. The storage resource may be used to store an identifier of the session, an identifier of an SMF associated with the session, and the like.
SMF: The SMF is responsible for user plane network element selection, user plane network element redirection, internet protocol (internet protocol, IP) address allocation, bearer establishment, modification, and release, and quality of service (quality of service, QoS) control.
UPF: The UPF is responsible for forwarding and receiving user data in the terminal device. For example, the UPF may receive user data from the DN, and transmit the user data to the terminal device via the radio access network device; or the UPF may receive user data from the terminal device via the radio access network device, and forward the user data to the DN. The UPF provides a service transmission resource and a scheduling function for the terminal device.
NEF: The NEF is configured to support secure interaction between a 3rd generation partnership project (3rd Generation Partnership Project, 3GPP) network and a third-party application.
AF: The AF is configured to provide a service, and may further provide some services of a third party for a network side.
PCF: The PCF is responsible for a policy control decision, and provides a control plane function policy rule, a traffic-based charging control function, and the like.
NSSF: The NSSF is mainly responsible for network slice selection, and determines, based on slice selection assistance information, subscription information, and the like of the terminal device, a network slice instance that the terminal device is allowed to access.
UDM: The UDM is mainly responsible for management of subscription data of the terminal device, including storage and management of an identifier of the terminal device, access authorization of the terminal device, and the like.
AUSF: The AUSF supports 3GPP and non-3GPP access authentication.
NRF: The NRF supports network function registration and discovery.
UDR: The UDR stores and obtains subscription data used by the UDM and the PCF.

Further, the UDM may be further separately communicatively connected to an interrogation-call session control function (interrogation-call session control function, I-CSCF), a serving-call session control function (serving-call session control function, S-CSCF), and an application server (application server, AS). For details, refer to a diagram of an architecture of another communication system shown in FIG. 2 as an example.

The I-CSCF is a unified entry point in an IMS network, and is responsible for allocating or querying an S-CSCF that serves a user. One IMS network may have a plurality of I-CSCFs, and one I-CSCF may correspond to one or more S-CSCFs.

The S-CSCF is a central node in the IMS network, and is responsible for user registration, authentication, and session, routing, and service triggering. One IMS network may have a plurality of S-CSCFs.

The AS is configured to implement service logic in the IMS network, and is a service core in the IMS network.

The I-CSCF may be further communicatively connected to a proxy-call session control function (proxy-call session control function, P-CSCF). The P-CSCF is an entity that is in the IMS network and that is configured to be responsible for receiving a verification request, forwarding the verification request to a specified target, and processing and forwarding a response.

As shown in FIG. 2, the UDM may separately directly communicate with the I-CSCF, the S-CSCF, and the AS. For example, the I-CSCF may directly send an LIR message to the UDM. Correspondingly, the UDM directly feeds back an LIA message to the I-CSCF.

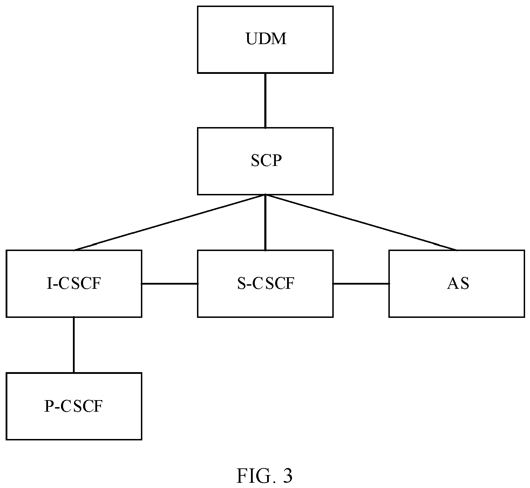

In addition, alternatively, the UDM may separately communicate with the I-CSCF, the S-CSCF, and the AS via a proxy device such as a service communication proxy (service communication proxy, SCP). The proxy device may be used as a signaling transfer device, and is configured to receive signaling and route the signaling to another node. The signaling may be signaling that complies with the Diameter protocol, and the signaling may also be referred to as Diameter signaling. In a diagram of an architecture of still another communication system shown in FIG. 3, the SCP may be deployed between the I-CSCF and the UDM, between the S-CSCF and the UDM, and between the AS and the UDM. The SCP may be configured to forward signaling between two network elements. For example, the SCP may forward signaling from the I-CSCF to the UDM, and correspondingly, the SCP may further forward signaling from the UDM to the I-CSCF.

It should be noted that each network element in a core network may also be referred to as a functional entity or device, and may be a network element implemented on dedicated hardware, may be a software instance running on dedicated hardware, or may be an instance of a virtualized function on a proper platform.

The architecture of the communication system shown in this application is not limited to including only the network elements shown in the figure, and may further include other devices that are not represented in the figure. Specific devices are not listed one by one herein in this application. A distribution form of each network element is not limited in this embodiment of this application. The distribution form shown in the figure is merely an example, and is not limited in this application.

The communication systems shown in FIG. 1 to FIG. 3 do not constitute any limitation on a communication system to which embodiments of this application are applicable. The communication system architectures shown in FIG. 1 to FIG. 3 are 5G system architectures. Optionally, the method in embodiments of this application is further applicable to a 4G system architecture, a 4.5G system architecture, or a future communication system, for example, a 5.5G communication system, a 6G communication system, or another communication system.

It should be understood that names of all network elements in this application are merely used as examples, and may also be referred to as other names in future communication, or the network element in this application may be replaced with another entity or device that has a same function in future communication. This is not limited in this application.

For ease of description, the following describes embodiments of this application with reference to the network elements in the 5G communication systems shown in FIG. 1 to FIG. 3.

The UDM may be configured to store user data (for example, subscription data or identity data) of a user corresponding to UE. The UDM may provide related data for a function in the IMS network in a UE register procedure, a UE call procedure, or the like. In a possible manner, the I-CSCF may request address information of an S-CSCF from the UDM, and the I-CSCF may determine the corresponding S-CSCF based on the requested address information, and perform a UE register or call procedure based on the S-CSCF.

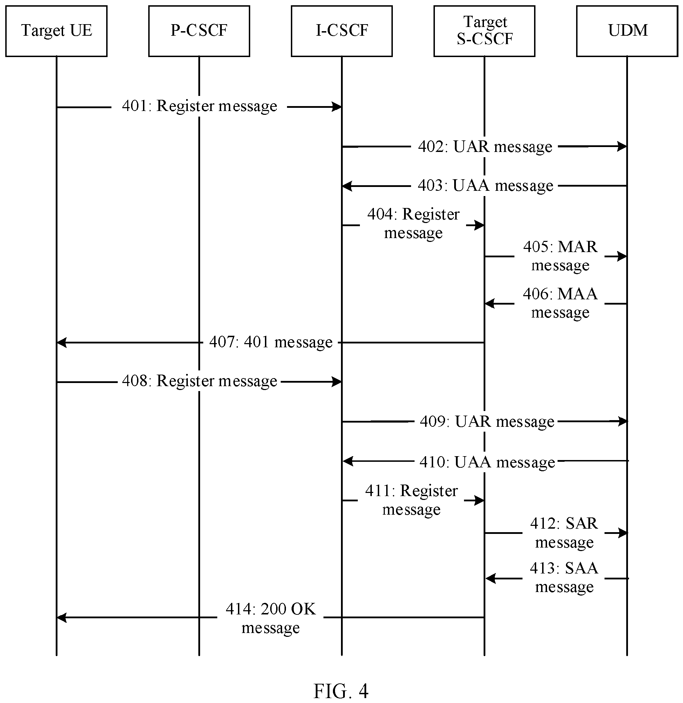

For ease of description, the following first separately describes a UE register procedure, a UE third-party register procedure, and a UE call procedure in existing solutions in this application with reference to FIG. 4 to FIG. 6. UE that performs a register procedure or a call procedure may be referred to as target UE, and an S-CSCF with which the target UE is previously registered is referred to as a target S-CSCF.

FIG. 4 is an example schematic diagram of a register procedure of target UE according to this application. An I-CSCF may request address information of a target S-CSCF from UDM. The register procedure may be an initial register procedure or a re-register procedure.

Step 401: The target UE sends a register (register) message to the I-CSCF.

The register message may include a requested destination address and a user identifier of a registered user. The target UE may first send the register message to a P-CSCF. The P-CSCF obtains address information of the I-CSCF based on the destination address in the register message, and then forwards the register message to the I-CSCF based on the address information of the I-CSCF.

Step 402: The I-CSCF sends a user authorization request (user authorization request, UAR) message to the UDM. The UAR message may include the user identifier of the registered user, and the UAR message may be used by the I-CSCF to request the address information of the target S-CSCF from the UDM.

Step 403: The UDM determines, based on the user identifier of the registered user in the UAR message, that the user has been registered, and then sends a user authorization answer (user authorization answer, UAA) message to the I-CSCF, where the UAA message may include the address information of the target S-CSCF.

Step 404: The I-CSCF obtains the address information of the target S-CSCF from the UAA message, and then sends a register message to the target S-CSCF based on the address information of the target S-CSCF. Herein, the register message may include the address information of the target S-CSCF and the user identifier of the registered user.

Step 405: The target S-CSCF sends a multimedia authentication request (multimedia authentication request, MAR) message to the UDM. The MAR message includes the user identifier of the registered user. The MAR message is used by the target S-CSCF to request an authentication vector (authorization vector, AV) from the UDM, and notify the UDM that the target S-CSCF currently serves the target UE.

Step 406: The UDM sends a multimedia authentication answer (multimedia authentication answer, MAA) message to the target S-CSCF, where the MAAmessage may include authentication information, and the authentication information may include an authentication vector quintet: an expected response (expected response, XRES), a random (random, RAND), an authentication token (authentication token, AUTN), an integrity key (integrity key, IK), and a cipher key (cipher key, CK).

Step 407: The target S-CSCF sends a 401 message to the target UE, where the 401 message may be used to return the authentication information to the target UE. Specifically, the target S-CSCF may generate a nonce (nonce) based on the RAND and the AUTN in the authentication information, and return the nonce, the IK, the CK, and an authentication algorithm to the P-CSCF along with the 401 message. The P-CSCF continues to forward the remaining authentication elements RAND and AUTN in the 401 message to the target UE.

Step 408: The target UE sends a register message to the I-CSCF. Specifically, the target UE performs authentication on a network based on the authentication information (for example, the AUTN) in the 401 message. If the authentication succeeds, it indicates that the 401 message comes from a real home network of the user. Then, the UE constructs a new register message and forwards the register message to the I-CSCF via the P-CSCF.

Step 409: The I-CSCF sends a UAR message to the UDM.

Step 410: The UDM sends a UAA message to the I-CSCF.

Step 411: The I-CSCF obtains the address information of the target S-CSCF from the UAA message, and then sends a register message to the target S-CSCF based on the address information of the target S-CSCF.

For included fields and functions of the messages in step 408 to step 411, refer to the descriptions in step 401 to step 404.

Step 412: The target S-CSCF sends a server assignment request (server assignment request, SAR) message to the UDM, where the SAR message may include the user identifier of the registered user, and the SAR message is used by the target S-CSCF to request to download subscription data of the registered user from the UDM.

Step 413: The UDM sends a server assignment answer (server assignment answer, SAA) to the target S-CSCF based on the user identifier of the registered user in the SAR message, where the SAA carries the subscription data of the registered user.

Step 414: The target S-CSCF sends a 200 OK message to the target UE. The 200 OK message is used to indicate that registration succeeds. Specifically, the 200 OK message may be sent by the target S-CSCF to the target UE via the I-CSCF and the P-CSCF.

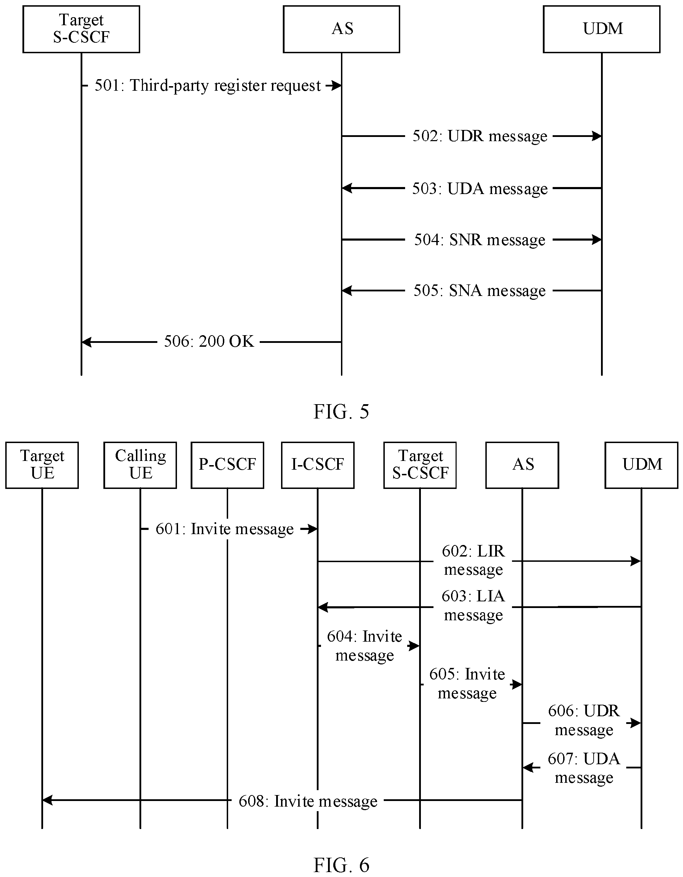

After the register procedure, the target S-CSCF may further initiate a third-party register procedure to an AS, as shown in FIG. 5.

Step 501: The target S-CSCF sends a third-party register request to the AS. The third-party register request may include the user identifier of the registered user, to be used by the AS to determine whether the user is registered with the AS for the first time and used by the AS to obtain user data of the registered user from the UDM.

Step 502: The AS sends a user data request (user data request, UDR) message to the UDM based on the user identifier of the registered user in the third-party register request, where the UDR message may include the user identifier of the registered user, to be used by the AS to request the user data of the registered user from the UDM, and the user data is, for example, user identity data or service subscription data.

Step 503: The UDM sends a user data answer (user data answer, UDA) message to the AS, where the UDA message carries the user data.

Step 504: The AS sends a subscribe notifications request (subscribe notifications request, SNR) message to the UDM based on the user data, where the SNR message is used by the AS to request to subscribe to the user data from the UDM.

Step 505: The UDM sends a subscribe notifications answer (subscribe notifications answer, SNA) to the AS, and correspondingly, the AS may determine, based on the SNA message, that the user data has been successfully subscribed to.

Step 506: The AS sends a 200 OK message to the target S-CSCF. The 200 OK message is used to indicate that third-party registration succeeds.

FIG. 6 is an example schematic diagram of a terminal call procedure according to this application. An I-CSCF may request address information of a target S-CSCF from UDM.

Step 601: Calling UE sends an invite (INVITE) message to the I-CSCF.

The calling UE is initiator UE of the call procedure, and the call procedure may be used to call target UE. The target UE herein may also be referred to as called UE. The invite message may include a user identifier of the calling UE and a user identifier of the called UE.

Specifically, the calling UE may first send the invite message to a P-CSCF, and then the P-CSCF sends the invite message to the I-CSCF. In other words, the invite message is sent by the calling UE to the I-CSCF via the P-CSCF.

Step 602: The I-CSCF sends a location information request (location information request, LIR) message to the UDM, where the LIR message includes the user identifier of the called UE, and the LIR message may be used by the I-CSCF to request, from the UDM, an address of the target S-CSCF with which the target UE is registered.

Step 603: After receiving the LIR message, the UDM checks the address information of the target S-CSCF of the target UE based on user register information in a local database, and then sends a location information answer (location information answer, LIA) message to the I-CSCF, where the LIA message includes the address information of the target S-CSCF.

Step 604: The I-CSCF sends an invite message to the target S-CSCF based on the address information that is of the target S-CSCF and that is included in the LIA message.

Step 605: The target S-CSCF sends an invite message to the AS. The AS herein may be specifically a service centralization and continuity application server (service centralization and continuity application server, SCC AS).

Step 606: The AS sends a UDR message to the UDM, where the UDR message is used by the AS to request terminating-access domain selection (terminating-access domain selection, T-ADS) information of the target UE from the UDM.

Step 607: The UDM feeds back a UDA message to the AS, where the UDA message includes the T-ADS information.

Step 608: The AS determines, based on a domain selection result, whether call connection (call connection) is performed in an IMS domain or another domain during this call, and then sends an invite message to the target UE. Specifically, the invite message may be sent by the AS to the target UE via the target S-CSCF and the P-CSCF.

In an actual operation, access to UDM may fail. For example, in the foregoing register (or call) procedure of the target UE, if the I-CSCF fails to access the UDM, the I-CSCF cannot obtain the address information of the target S-CSCF from the UDM, in other words, cannot determine the target S-CSCF, resulting in a register (or call) failure of the target UE.

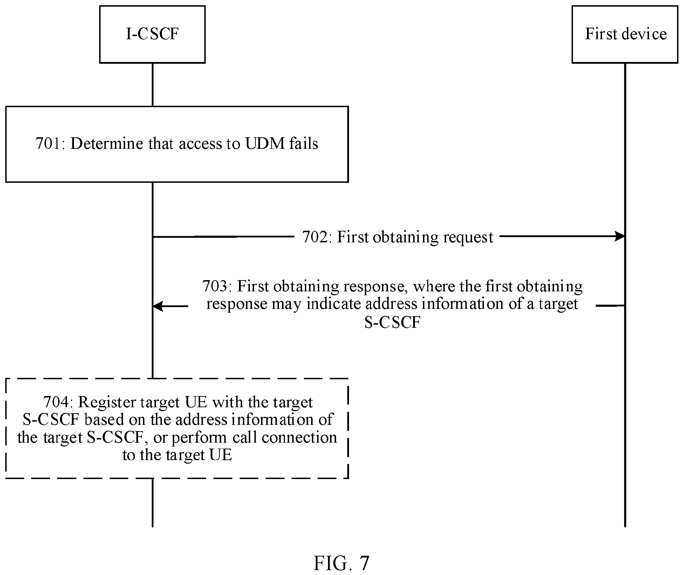

Therefore, this application provides a method for determining an S-CSCF, so that an I-CSCF determines a target S-CSCF when access to UDM fails, to complete a register (or call) procedure of target UE. FIG. 7 is an example flowchart of a method for determining a target S-CSCF by an I-CSCF when access to UDM fails according to this application. The flowchart includes the following steps.

Step 701: The I-CSCF determines that access to the UDM fails.

In this application, after receiving a register message initiated by target UE or an invite message initiated by calling UE for the target UE, the I-CSCF may query address information of the target S-CSCF from the UDM.

The I-CSCF sends a query request to the UDM. The query request may be used to query the address information of the target S-CSCF. For example, the query request may include an identifier of the target UE, and the identifier of the target UE may be understood as a user identifier corresponding to the target UE. In a UE register process, the identifier of the target UE is specifically a user identifier of a registered user corresponding to the target UE. In a UE call process, the identifier of the target UE is specifically a user identifier of a called user corresponding to the target UE. For example, the query request may be the UAR message in the related embodiment in FIG. 4, and the identifier of the target UE is specifically the user identifier of the registered user in the UAR message; or the query request may be the LIR message in the related embodiment in FIG. 6, and the identifier of the target UE is specifically the user identifier of the called UE in the LIR message.

In a case, the I-CSCF receives a query response from the UDM. If the query response includes the address information of the target S-CSCF, it indicates that the I-CSCF normally accesses the UDM. The I-CSCF may perform a register procedure or a call procedure based on the address information that is of the target S-CSCF and that is included in the query response.

In another case, if the I-CSCF receives no query response from the UDM after preset query duration expires after the query request is sent to the UDM, or receives a query failure response returned by the UDM, the I-CSCF determines that access to the UDM fails (or it is difficult to access the UDM). Correspondingly, the I-CSCF may send a first obtaining request to a first device. For details, refer to the following step 702.

That access to the UDM fails may include at least one or more of the following cases:
a UDM device is faulty, a UDM access link is unreachable, a UDM capacity is insufficient, UDM flow control is performed, a communication link capacity is insufficient, communication link flow control is performed, a transmission network is faulty, and an SCP is faulty.

Step 702: The I-CSCF sends a first obtaining request to a first device. Optionally, the first obtaining request may be used to indicate that access to the UDM fails. The first device may be an S-CSCF or a backup device.

Specifically, if the first device is an S-CSCF, the first obtaining request may be used to determine whether the first device is the target S-CSCF; or if the first device is a backup device, the first obtaining request may be used to request the address information of the target S-CSCF from the first device. For details, refer to descriptions in step 703.

Step 703: The first device sends a first obtaining response to the I-CSCF based on the first obtaining request. The first obtaining response may be used to indicate the address information of the target S-CSCF.

In this application, the first device may be the target S-CSCF or a backup device. The following describes two cases.

Case 1: The first device is the target S-CSCF.

In this application, one I-CSCF may correspond to an S-CSCF set, and the S-CSCF set may include M S-CSCFs, where M is an integer greater than 1. The I-CSCF may send an obtaining request to any one of the M S-CSCFs to determine whether the S-CSCF receiving the obtaining request is the target S-CSCF. Correspondingly, after receiving the obtaining request, the S-CSCF may indicate, to the I-CSCF, whether the S-CSCF is the target S-CSCF.

The S-CSCF may indicate, to the I-CSCF in the following two possible manners, whether the S-CSCF is the target S-CSCF.

In a possible manner 1, the S-CSCF may feed back an obtaining response to the I-CSCF. Specifically, the obtaining response may be a determining response or a denying response. The determining response may be used to indicate that the S-CSCF is the target S-CSCF, and the denying response may be used to indicate that the S-CSCF is not the target S-CSCF. It may also be understood that the determining response is an indication for determining that the S-CSCF is the target S-CSCF, and the denying response is an indication for denying that the S-CSCF is the target S-CSCF. In an example, the obtaining response may indicate, by using a preset bit, whether the S-CSCF is the target S-CSCF. For example, the obtaining response may perform indication by using one preset bit. When a value of the bit is 1, the obtaining response indicates that the S-CSCF determines that the S-CSCF is the target S-CSCF; or when a value of the bit is 0, the obtaining response indicates that the S-CSCF denies that the S-CSCF is the target S-CSCF.

In a possible manner 2, if the S-CSCF determines that the S-CSCF is the target S-CSCF, the S-CSCF may feed back an obtaining response to the I-CSCF. Specifically, the obtaining response may be a determining response (referring to the foregoing description), or the obtaining response may include the address information of the target S-CSCF, to indicate that the S-CSCF is the target S-CSCF. If the S-CSCF determines that the S-CSCF is not the target S-CSCF, the S-CSCF may feed back no response to the I-CSCF.

For ease of description, the following uses the possible manner 1 as an example to describe how the I-CSCF selects the target S-CSCF (the first device) from the M S-CSCFs in the S-CSCF set. For details, refer to the following three examples.

Example 1: The I-CSCF separately sends an obtaining request to each S-CSCF in the S-CSCF set.

The I-CSCF selects an S-CSCF from the S-CSCF set, and then the I-CSCF sends an obtaining request to the S-CSCF to determine whether the S-CSCF is the target S-CSCF.

If the selected S-CSCF is not the target S-CSCF, after receiving the obtaining request of the I-CSCF, the selected S-CSCF determines, based on the obtaining request, that the selected S-CSCF is not the target S-CSCF, and then sends a denying response to the I-CSCF to deny that the selected S-CSCF is the target S-CSCF. For example, after determining that the selected S-CSCF is not the target S-CSCF, the selected S-CSCF sets a value of a preset bit in an obtaining response (the obtaining response is a denying response) to 0. Correspondingly, the I-CSCF determines, based on the value 0 of the preset bit in the obtaining response, that the selected S-CSCF is not the target S-CSCF. Further, the I-CSCF selects a new S-CSCF from the S-CSCF set, and continues to send an obtaining request to the new S-CSCF to determine whether the new S-CSCF is the target S-CSCF. The rest may be deduced by analogy until the I-CSCF selects the target S-CSCF from the S-CSCF set.

If the selected S-CSCF is the target S-CSCF, after receiving the obtaining request of the I-CSCF, the selected S-CSCF determines, based on the obtaining request, that the selected S-CSCF is the target S-CSCF, and then sends a determining response to the I-CSCF to determine that the selected S-CSCF is the target S-CSCF. After receiving the determining response, the I-CSCF determines that the selected S-CSCF is the target S-CSCF. For example, after determining that the selected S-CSCF is the target S-CSCF, the selected S-CSCF sets a value of a preset bit in an obtaining response (the obtaining response is a determining response) to 1. Correspondingly, the I-CSCF determines, based on the value 1 of the preset bit in the obtaining response, that the selected S-CSCF is the target S-CSCF.

Example 2: The I-CSCF sends an obtaining request to a plurality of S-CSCFs in an S-CSCF subset in a multicast manner.

The S-CSCF set corresponding to the I-CSCF may further include a plurality of S-CSCF subsets. The subset may include m S-CSCFs, where m is an integer greater than 1. The I-CSCF may select a subset from the plurality of S-CSCF subsets. Then, the I-CSCF separately sends an obtaining request to m S-CSCFs in the selected subset, to determine whether the target S-CSCF exists in the selected subset. Correspondingly, each of the m S-CSCFs receives the obtaining request, and then determines, based on the obtaining request, whether the S-CSCF is the target S-CSCF.

If the selected subset does not include the target S-CSCF, each S-CSCF in the selected subset sends a denying response of the S-CSCF to the I-CSCF. The I-CSCF receives the denying response sent by each S-CSCF in the selected subset, and determines that the subset does not include the target S-CSCF; and then selects another subset from the plurality of S-CSCF subsets, and determines whether the new subset includes the target S-CSCF. The rest may be deduced by analogy until the I-CSCF selects, from the plurality of S-CSCF subsets, a subset that includes the target S-CSCF.

If the selected subset includes the target S-CSCF, after receiving the obtaining request of the I-CSCF, the target S-CSCF in the selected subset may determine, based on the obtaining request, that the target S-CSCF is the target S-CSCF, and then send a determining response to the I-CSCF. Further, all S-CSCFs other than the target S-CSCF in the subset send respective denying responses to the I-CSCF. The I-CSCF receives the determining response of the target S-CSCF in the subset and the denying responses of the S-CSCFs other than the target S-CSCF in the subset, and determines that the subset includes the target S-CSCF.

In this example, for the denying response and the determining response, refer to the descriptions in the foregoing example 1. Details are not described again.

The I-CSCF simultaneously (or concurrently) sends the obtaining request to the plurality of S-CSCFs in the subset in the multicast manner, thereby helping improve efficiency of determining the target S-CSCF by the I-CSCF.

Example 3: The I-CSCF sends an obtaining request to all the S-CSCFs in the S-CSCF set in a broadcast manner.

In this example, after receiving the obtaining request of the I-CSCF, the target S-CSCF in the S-CSCF set determines, based on the obtaining request, that the target S-CSCF is the target S-CSCF, and then sends a determining response to the I-CSCF. Further, all S-CSCFs other than the target S-CSCF in the S-CSCF set send respective denying responses to the I-CSCF. The I-CSCF receives the determining response of the target S-CSCF in the S-CSCF set and the denying responses of the S-CSCFs other than the target S-CSCF in the S-CSCF set, and determines the target S-CSCF from the S-CSCF set.

In this example, for the denying response and the determining response, refer to the descriptions in the foregoing example 1. Details are not described again.

The I-CSCF simultaneously (or concurrently) sends the obtaining request to all the S-CSCFs in the S-CSCF set in the broadcast manner, thereby helping improve efficiency of determining the target S-CSCF by the I-CSCF.

It should be added that an S-CSCF may determine whether user data of the target UE is locally stored, to determine whether the S-CSCF is the target S-CSCF.

It is explained that the I-CSCF selects the target S-CSCF from the S-CSCF set to find an S-CSCF with which the target UE has been registered, that is, in a previous register procedure of the target UE, the target S-CSCF has stored the user data of the target UE. If the S-CSCF determines that the user data of the target UE is locally stored, the S-CSCF may determine that the S-CSCF is the target S-CSCF.

In a specific implementation, the obtaining request sent by the I-CSCF to the S-CSCF includes an identifier of the target UE. The identifier of the target UE is, for example, an international mobile subscriber identity (international mobile subscriber identification number, IMSI). Correspondingly, based on the identifier of the target UE, the S-CSCF may query whether user data corresponding to the identifier of the target UE is locally stored, in other words, determine whether the user data of the target UE is locally stored. If the S-CSCF determines that the user data of the target UE is locally stored, the S-CSCF sends a determining response to the I-CSCF, where the determining response is specifically an indication for determining that the S-CSCF is the target S-CSCF; or if the S-CSCF determines that the user data of the target UE is not locally stored, the S-CSCF sends a denying response to the I-CSCF, where the denying response is specifically an indication for determining that the S-CSCF is not the target S-CSCF.

In addition, it should be further added that, because the target S-CSCF needs to store user data of the target UE in a previous register procedure, the target S-CSCF does not immediately clear the locally stored user data of the target UE after receiving a deregister request from the target UE, but clears the locally stored user data of the target UE after preset deregister duration expires after receiving a deregister request from the target UE.

In the foregoing implementation, the target S-CSCF sends the determining response to the I-CSCF, and the another S-CSCFs send the denying responses to the I-CSCF. In this way, the I-CSCF can determine, based on a received determining response or denying response, whether a corresponding S-CSCF is the target S-CSCF. There may be another implementation in this application. Specifically, the target S-CSCF may alternatively send an obtaining response including the address information (own address information) of the target S-CSCF to the I-CSCF. Correspondingly, the I-CSCF obtains an address of the target S-CSCF from the obtaining response, to determine the target S-CSCF.

In this implementation, if another S-CSCF determines that the another S-CSCF is not the target S-CSCF, the another S-CSCF may not reply with any message. Correspondingly, if the I-CSCF determines that no obtaining response is received after preset obtaining duration expires after an obtaining request is sent, the I-CSCF may determine that a current S-CSCF is not the target S-CSCF. Then, the I-CSCF selects a new S-CSCF and sends an obtaining request to the new S-CSCF. For a specific implementation, refer to the foregoing descriptions.

In the foregoing implementation, the target S-CSCF in the M S-CSCFs may be understood as the first device, an obtaining request sent by the I-CSCF to the target S-CSCF may be referred to as the first obtaining request, and an obtaining response sent by the target S-CSCF to the I-CSCF in response to the first obtaining request may be referred to as a first obtaining response. The first obtaining response may be a determining response, or the first obtaining response includes the address information of the target S-CSCF.

Further, another S-CSCF other than the target S-CSCF in the M S-CSCFs may be understood as a second device, an obtaining request sent by the I-CSCF to the another S-CSCF may be referred to as a second obtaining request, and an obtaining response sent by the another S-CSCF to the I-CSCF in response to the second obtaining request may be referred to as a second obtaining response. The second obtaining response may be a denying response, or the another S-CSCF sends no response to the I-CSCF.

Case 2: The first device is a backup device.

Correspondingly, the first obtaining response may include the address information of the target S-CSCF.

Specifically, the backup device may locally store N1 correspondences, where N1 is an integer greater than or equal to 2. Each correspondence may include an identifier of UE and address information of an S-CSCF corresponding to the UE.

For example, in an example in Table 1, an identifier of UE 11 is represented as an identifier 11, and the identifier 11 corresponds to address information 11, that is, the UE 11 is registered with an S-CSCF corresponding to the address information 11; an identifier of UE 12 is represented as an identifier 12, and the identifier 12 corresponds to address information 12, that is, the UE 12 is registered with an S-CSCF corresponding to the address information 12; and so on.

**Table 1**

| UE identifier | S-CSCF address information |
|---|---|
| Identifier 11 | Address information 11 |
| Identifier 12 | Address information 12 |
| Identifier 13 | Address information 13 |
| ... | ... |
| Identifier N1 | Address information N1 |

The I-CSCF sends the first obtaining request to the backup device. The first obtaining request includes the identifier of the target UE. Correspondingly, the backup device may determine the address information of the target S-CSCF corresponding to the target UE from the locally stored N1 correspondences based on the identifier of the target UE in the first obtaining request, and then send the first obtaining response to the I-CSCF. The first obtaining response includes the address information of the target S-CSCF. For example, the target UE is the UE 12. With reference to the example in Table 1, the first obtaining request may include the identifier 12. Correspondingly, the backup device may determine the address information 12 from the N1 correspondences based on the identifier 12, and then send, to the I-CSCF, the first obtaining response including the address information 12.

In a possible implementation, when access to the UDM is normal, the I-CSCF may register user data of the target UE with the UDM. For a specific register procedure, refer to FIG. 4. Subsequently, the I-CSCF may send the identifier of the target UE and the address information of the target S-CSCF to the backup device, and the backup device correspondingly stores the identifier of the target UE and the address information of the target S-CSCF. In addition, the backup device may further update a locally stored correspondence.

Still in the example in which the target UE is the UE 12, the I-CSCF successfully registers user data of the UE 12 with the UDM, and then the I-CSCF sends the identifier 12 of the UE 12 and the address information 12 of the target S-CSCF to the backup device. If the backup device determines, based on the identifier 12, that the identifier 12 and the address information corresponding to the identifier 12 do not exist in a local storage, the backup device correspondingly stores the identifier 12 and the address information 12.

Further, after a next register procedure of the UE 12, the I-CSCF may further send the identifier 12 of the UE 12 and address information (represented as, for example, address information 12') of a target S-CSCF to the backup device. Correspondingly, if the backup device determines, based on the identifier 12, that the identifier 12 and the address information corresponding to the identifier 12 exist in the local storage, the backup device may update a correspondence in the local storage. Alternatively, it may be understood that the original address information 12 is overwritten with the address information 12'.

In this application, to ensure validity of a correspondence in the backup device, aging processing may be performed on data locally stored in the backup device. For example, if duration during which a correspondence is continuously stored in the backup device reaches preset storage duration, and the correspondence is not read or updated, the correspondence may be deleted.

Alternatively, in another possible manner, the I-CSCF may indicate, based on a deregister request of UE, the backup device to delete a correspondence that is of the UE and that is locally stored in the backup device. For example, for the target UE, the I-CSCF may receive a deregister request from the target UE; and after receiving the deregister request, send a delete instruction to the backup device after preset deregister duration expires, to instruct to delete the identifier of the target UE and the address information of the target S-CSCF that are correspondingly stored in the backup device. For example, the delete instruction may include the identifier of the target UE. Correspondingly, the backup device correspondingly deletes, according to the delete instruction, the identifier of the target UE and the address information of the target S-CSCF that are locally stored.

In addition, the backup device may also have own backup device. For example, a communication system may include a backup device 1 to a backup device n, where n is an integer greater than or equal to 2.

In a possible manner, the N1 correspondences may be separately stored in the backup device 1 to the backup device n, in other words, each backup device stores the N1 correspondences. When the I-CSCF cannot obtain the address information of the target S-CSCF from one of the backup devices, the I-CSCF may obtain the address information of the target S-CSCF from another backup device, thereby improving system stability.

For example, the I-CSCF may separately send a correspondence between the identifier of the target UE and the address information of the target S-CSCF to the backup device 1 to the backup device n, so that each backup device stores the correspondence. Correspondingly, the I-CSCF may further separately send a delete instruction to the backup device 1 to the backup device n, so that each backup device deletes the locally stored correspondence. Alternatively, the backup device 1 is used as a primary backup device, the I-CSCF may send the correspondence to the backup device 1, and the backup device 1 separately sends the correspondence to a backup device 2 to the backup device n, so that each backup device stores the correspondence. Correspondingly, the I-CSCF may further send a delete instruction to the backup device 1, and the backup device 1 separately sends the delete instruction to the backup device 2 to the backup device n, so that each backup device deletes the locally stored correspondence. Alternatively, another manner may be used. This is not limited in this application.

In addition, to ensure consistency of the N1 correspondences stored in the backup device 1 to the backup device n, the n backup devices may further periodically perform a synchronization operation.

In another possible manner, the N1 correspondences may be divided into n parts, and then the n parts of correspondences are respectively stored in the backup device 1 to the backup device n. For example, N1 is equal to 60 million, and n is equal to 2, that is, there are correspondences of 60 million users in total, and the correspondences of the 60 million users may be divided into two parts. Correspondences of 30 million users are stored in the backup device 1, and correspondences of the other 30 million users are stored in the backup device 2. In this way, a storage amount of each backup device can be reduced. Certainly, the correspondences in the backup device 1 may be further backed up to a backup device 3, and the correspondences in the backup device 2 may be further backed up to a backup device 4. When the I-CSCF cannot obtain the address information of the target S-CSCF from one of the backup devices, the I-CSCF may obtain the address information of the target S-CSCF from another backup device, thereby improving system stability.

It should be noted that, in this application, alternatively, the target S-CSCF may send the correspondence between the identifier of the target UE and the address information of the target S-CSCF to the backup device, or the target S-CSCF may send a delete instruction to the backup device. A specific manner is similar to the sending manner of the I-CSCF, and details are not described.

In this application, the backup device may be any one or more of an I-CSCF, an S-CSCF, a P-CSCF, an SCP, and an AS in the foregoing communication system.

When the backup device is an I-CSCF, the I-CSCF used as the backup device may be the same as or different from the I-CSCF that sends the obtaining request. When the I-CSCF used as the backup device is the same as the I-CSCF that sends the obtaining request, it may be understood that the I-CSCF locally correspondingly stores the identifier of the target UE and the address information of the target S-CSCF; or when determining that access to the UDM fails, the I-CSCF obtains the address information of the target S-CSCF from the local storage based on the identifier of the target UE; or deletes the locally stored correspondence.

When the backup device is an S-CSCF, the S-CSCF used as the backup device may be the same as or different from the target S-CSCF. When the S-CSCF used as the backup device is the same as the target S-CSCF, it may be understood that the target S-CSCF locally correspondingly stores the identifier of the target UE and the address information of the target S-CSCF; or after receiving the first obtaining request, the target S-CSCF may locally obtain the address information of the target S-CSCF based on the identifier of the target UE in the first obtaining request; or delete the locally stored correspondence.

After receiving the first obtaining response, the I-CSCF may obtain the address information of the target S-CSCF based on the first obtaining response. Optionally, the I-CSCF may further perform the following step 704.

Step 704: The I-CSCF registers the target UE with the target S-CSCF based on the address information of the target S-CSCF, or performs call connection to the target UE.

In a possible case, after receiving a register request (including an initial register request or a re-register request) of the target UE, the I-CSCF may send a query request to the UDM. Then, the I-CSCF determines that access to the UDM fails, and obtains the address information of the target S-CSCF from the first device. In this case, the I-CSCF may further perform a register procedure of the target UE based on the address information of the target S-CSCF. For details, refer to FIG. 4.

In addition, the I-CSCF may further send a UDM access failure indication to the target S-CSCF and/or the AS. Correspondingly, the target S-CSCF may not need to perform step 405, step 406, step 412, and step 413 in FIG. 4 based on the UDM access failure indication, and the AS may not need to perform step 502 to step 505 in FIG. 5 based on the UDM access failure indication. This helps prevent the target S-CSCF and/or the AS from performing unnecessary signaling transmission.

In another possible case, after receiving a call request for the target UE, the I-CSCF may send a query request to the UDM. Then, the I-CSCF determines that access to the UDM fails, and obtains the address information of the target S-CSCF from the first device. In this case, the I-CSCF may further perform a call procedure of the target UE based on the address information of the target S-CSCF. For details, refer to FIG. 6.

In addition, the I-CSCF may further send a UDM access failure indication to the AS. Correspondingly, the AS may not need to perform step 606 and step 607 in FIG. 6 based on the UDM access failure indication. This helps prevent the AS from performing unnecessary signaling transmission.

It should be noted that, if the first device is the target S-CSCF, the I-CSCF may send, in step 704, a UDM access failure indication to the target S-CSCF, to notify the target S-CSCF that access to the UDM fails, or the I-CSCF may indicate, to the target S-CSCF by using the first obtaining request in step 702, that access to the UDM fails.

For example, the first obtaining request may further include a UDM access failure indication. Correspondingly, after receiving the first obtaining request, the target S-CSCF determines, based on the UDM access failure indication and the identifier of the target UE in the first obtaining request, that the target S-CSCF is the target S-CSCF, and then may continue to perform a subsequent UE register procedure. Herein, the first obtaining request may be understood as a register request. Correspondingly, the target S-CSCF continues to perform the subsequent UE register procedure based on the register request. In this way, the I-CSCF does not need to trigger the target S-CSCF again to continue to perform the subsequent UE register procedure. In addition, the target S-CSCF may further indicate, to the AS, that access to the UDM fails.

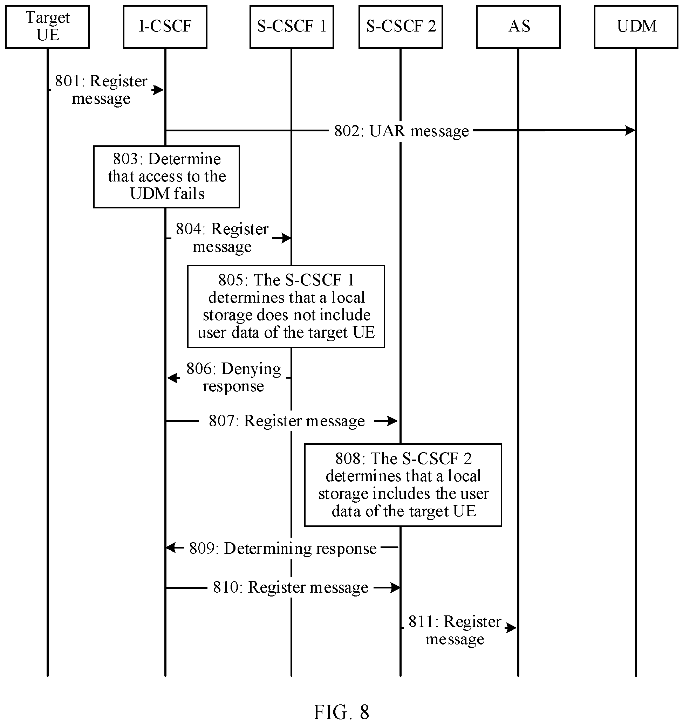

To better explain embodiments of this application, FIG. 8 to FIG. 11 respectively show implementations in four specific scenarios provided in this application.

FIG. 8 is a schematic flowchart of a scenario in which an I-CSCF searches an S-CSCF set for a target S-CSCF in a unicast manner in a register procedure of target UE.

In this scenario, it may be assumed that the I-CSCF sends a register message (equivalent to the obtaining request in the related embodiment in FIG. 7) to an S-CSCF 1 and an S-CSCF 2 in sequence starting from the S-CSCF 1. The S-CSCF 2 is a target S-CSCF.

Step 801: The target UE sends a register message to the I-CSCF.

Step 802: The I-CSCF sends a UAR message to UDM based on the register message. The UAR message is equivalent to the query request in step 701.

Step 803: The I-CSCF receives no response message from the UDM after preset query duration after the UAR message is sent, and then determines that access to the UDM fails.

Step 804: The I-CSCF sends a register message to the S-CSCF 1, where the register message may include a UDM access failure indication and an identifier of the target UE.

Step 805: The S-CSCF 1 determines, through searching based on the register message, whether a local storage of the S-CSCF 1 includes user data of the target UE. Then, the S-CSCF 1 determines that the local storage does not include the user data of the target UE.

Step 806: The S-CSCF 1 sends a denying response to the I-CSCF, where the denying response is specifically an indication for denying that the S-CSCF 1 is the target S-CSCF.

Step 807: After determining that the S-CSCF 1 is not the target S-CSCF, the I-CSCF selects a new S-CSCF (the S-CSCF 2), and then sends a register message to the S-CSCF 2, where the register message may still include the UDM access failure indication and the identifier of the target UE.

Step 808: The S-CSCF 2 determines, through searching based on the register message, whether a local storage of the S-CSCF 2 includes the user data of the target UE. Then, the S-CSCF 2 determines that the local storage includes the user data of the target UE.

Step 809: The S-CSCF 2 sends a determining response to the I-CSCF, where the determining response is specifically an indication for determining that the S-CSCF 2 is the target S-CSCF.

Step 810: After determining that the S-CSCF 2 is the target S-CSCF, the I-CSCF sends a register message to the S-CSCF 2, where the register message includes the UDM access failure indication.

Step 811: The S-CSCF 2 sends a register message to an AS, where the register message includes the UDM access failure indication.

It should be noted that step 810 is an optional step. After determining that the S-CSCF 2 is the target S-CSCF, the S-CSCF 2 may alternatively directly perform step 811 based on the register message of the I-CSCF. In addition, for content that is not described in detail in step 801 to step 811, refer to the descriptions in the related embodiment in FIG. 4, FIG. 5, or FIG. 7.

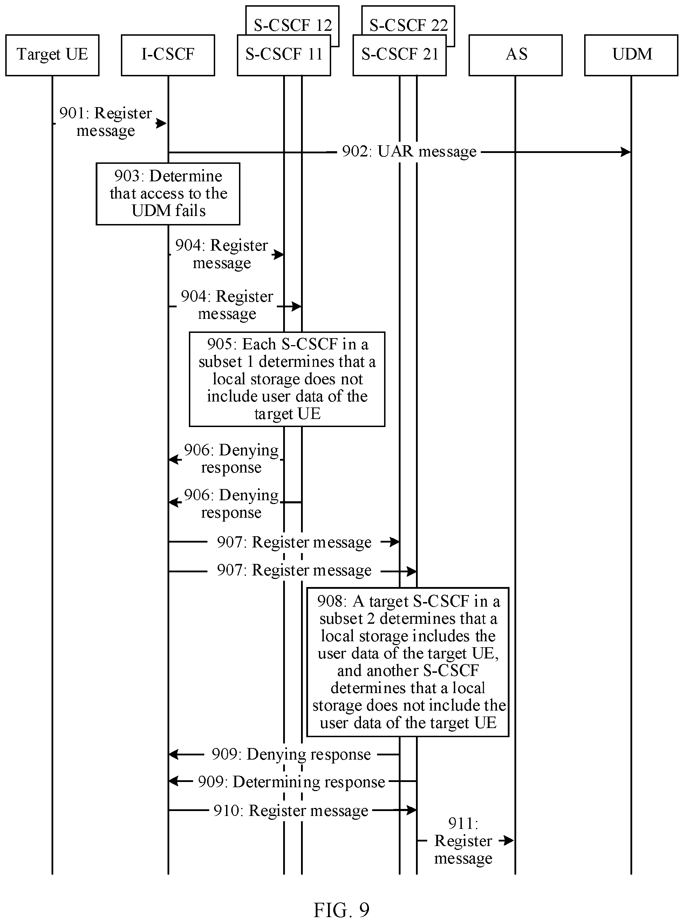

FIG. 9 is a schematic flowchart of a scenario in which an I-CSCF searches an S-CSCF set for a target S-CSCF in a multicast manner in a register procedure.

In this scenario, it may be assumed that the I-CSCF sends a register message (equivalent to the obtaining request in the related embodiment in FIG. 7) to a plurality of S-CSCFs in a subset 1 and a plurality of S-CSCFs in a subset 2 in sequence starting from the subset 1. The subset 1 includes an S-CSCF 11 and an S-CSCF 12, the subset 2 includes an S-CSCF 21 and an S-CSCF 22, and the S-CSCF 22 is the target S-CSCF.

Step 901: Target UE sends a register message to the I-CSCF.

Step 902: The I-CSCF sends a UAR message to UDM based on the register message. The UAR message is equivalent to the query request in step 701.

Step 903: After the UAR message is sent, the I-CSCF receives no response message from the UDM after preset query duration, and then determines that access to the UDM fails.

Step 904: The I-CSCF separately sends a register message to the S-CSCF 11 and the S-CSCF 12 in the subset 1, where the register message may include a UDM access failure indication and an identifier of the target UE.

Step 905: Each S-CSCF in the subset 1 determines that a local storage does not include user data of the target UE. Details are as follows:
The S-CSCF 11 determines, through searching based on the register message, whether a local storage of the S-CSCF 11 includes the user data of the target UE. Then, the S-CSCF 11 determines that the local storage does not include the user data of the target UE.
The S-CSCF 12 determines, through searching based on the register message, whether a local storage of the S-CSCF 12 includes the user data of the target UE. Then, the S-CSCF 12 determines that the local storage does not include the user data of the target UE.

Step 906: The S-CSCF 11 sends a denying response to the I-CSCF, where the denying response is specifically an indication for denying that the S-CSCF 11 is the target S-CSCF; and the S-CSCF 12 sends a denying response to the I-CSCF, where the denying response is specifically an indication for denying that the S-CSCF 12 is the target S-CSCF.

Step 907: After determining that the target S-CSCF does not exist in the subset 1, the I-CSCF separately sends a register message to the S-CSCF 21 and the S-CSCF 22 in the subset 2, where the register message may include the UDM access failure indication and the identifier of the target UE.

Step 908: The target S-CSCF in the subset 2 determines that a local storage includes the user data of the target UE, and another S-CSCF determines that a local storage does not include the user data of the target UE. Details are as follows:
The S-CSCF 21 determines, through searching based on the register message, whether a local storage of the S-CSCF 21 includes the user data of the target UE. Then, the S-CSCF 21 determines that the local storage does not include the user data of the target UE.
The S-CSCF 22 determines, through searching based on the register message, whether a local storage of the S-CSCF 22 includes the user data of the target UE. Then, the S-CSCF 22 determines that the local storage includes the user data of the target UE.

Step 909: The S-CSCF 21 sends a denying response to the I-CSCF, where the denying response is specifically an indication for denying that the S-CSCF 21 is the target S-CSCF; and the S-CSCF 22 sends a determining response to the I-CSCF, where the determining response is specifically an indication for determining that the S-CSCF 22 is the target S-CSCF.

Step 910: The I-CSCF determines that the S-CSCF 22 is the target S-CSCF, and then sends a register message to the S-CSCF 22, where the register message may include the UDM access failure indication.

Step 911: The S-CSCF 22 sends a register message to an AS, where the register message includes the UDM access failure indication.

It should be noted that step 910 is an optional step. After determining that the S-CSCF 22 is the target S-CSCF, the S-CSCF 22 may alternatively directly perform step 911 based on the register message of the I-CSCF. In addition, for content that is not described in detail in step 901 to step 911, refer to the descriptions in the related embodiment in FIG. 4, FIG. 5, or FIG. 7.

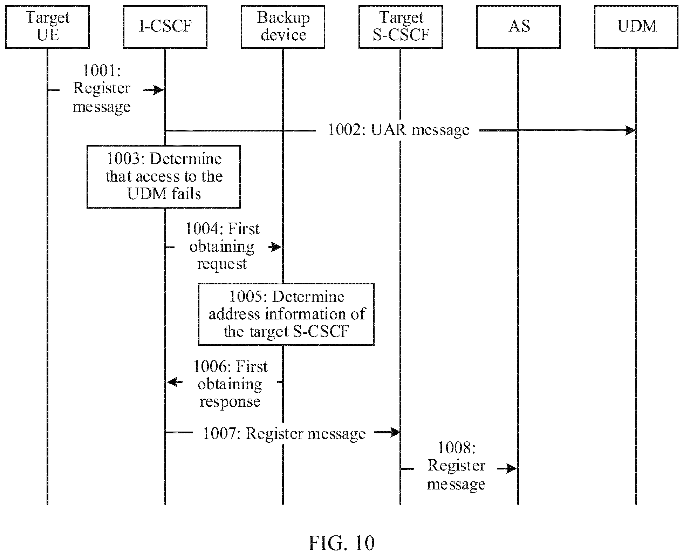

FIG. 10 is a schematic flowchart of a scenario in which an I-CSCF queries address information of a target S-CSCF from a backup device in a register procedure.

Step 1001: Target UE sends a register message to the I-CSCF.

Step 1002: The I-CSCF sends a UAR message to UDM based on the register message. The UAR message is equivalent to the query request in step 701.

Step 1003: The I-CSCF receives no response message from the UDM after preset query duration after the UAR message is sent, and then determines that access to the UDM fails.

Step 1004: The I-CSCF sends a first obtaining request to the backup device, where the first obtaining request may include a UDM access failure indication and an identifier of the target UE.

Step 1005: The backup device searches, based on the first obtaining request, a local storage of the backup device for address information that is of an S-CSCF and that corresponds to the identifier of the target UE, and uses the address information of the S-CSCF as the address information of the target S-CSCF.

Step 1006: The S-CSCF 1 sends a first obtaining response to the I-CSCF, where the first obtaining response may include the address information of the target S-CSCF.

Step 1007: The I-CSCF sends a register message to the target S-CSCF based on the address information of the target S-CSCF, where the register message may include the UDM access failure indication.

Step 1008: The target S-CSCF sends a register message to an AS, where the register message may include the UDM access failure indication.

It should be noted that, for content that is not described in detail in step 1001 to step 1008, refer to the descriptions in the related embodiment in FIG. 4, FIG. 5, or FIG. 7.

It should be further added that FIG. 8 to FIG. 10 may also be applied to a procedure of calling target UE, provided that "register message" is replaced with "invite message", "UAR message" is replaced with "LIR message", and so on; and an AS receives an invite message from a target S-CSCF, and performs call connection for the target UE to an IMS domain based on a UDM access failure indication included in the invite message. For details, refer to the descriptions in the related embodiments in FIG. 6 to FIG. 10. Details are not described.

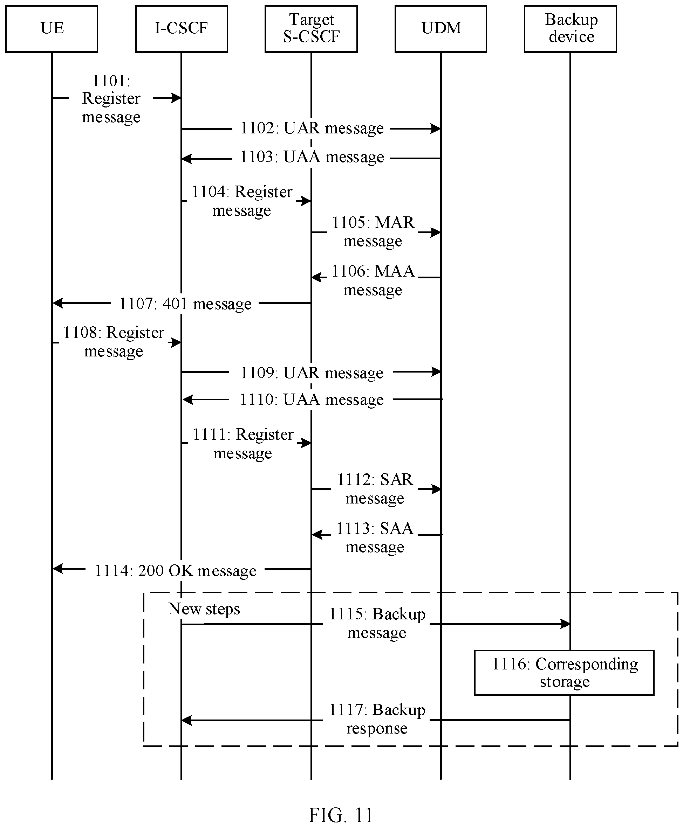

FIG. 11 is a schematic flowchart of a scenario in which an I-CSCF correspondingly stores an identifier of target UE and address information of a target S-CSCF in a backup device when access to UDM is normal.

For details of step 1101 to step 1114, refer to step 401 to step 414 in FIG. 4. In this procedure, step 1115 to step 1117 are new steps.

Step 1115: The I-CSCF sends a backup message to the backup device, where the backup message includes the identifier of the target UE and the address information of the target S-CSCF.

Step 1116: The backup device obtains the identifier of the target UE and the address information of the target S-CSCF from the backup message, and correspondingly stores the identifier of the target UE and the address information of the target S-CSCF.

Step 1117: The backup device sends a backup response to the I-CSCF, to indicate that the identifier of the target UE and the address information of the target S-CSCF are successfully correspondingly stored.

It should be added that, in the foregoing step 1115 to step 1117, alternatively, the target S-CSCF may send a backup message to the backup device, and correspondingly, the backup device sends a backup response to the target S-CSCF.

In the foregoing technical solution, when determining that access to the UDM fails, the I-CSCF may send the first obtaining request to the first device. Further, the I-CSCF may receive the first obtaining response from the first device, where the first obtaining response may be used to indicate the address information of the target S-CSCF, so that the I-CSCF can obtain the address information of the target S-CSCF, and then perform a register procedure of the target UE or a call procedure of the target UE based on the address information of the target S-CSCF. This avoids a case in which the UE cannot be successfully registered or called when access to the UDM fails, thereby helping improve reliability of a communication system. Certainly, this application is further applicable to other scenarios in which a target S-CSCF needs to be determined. Examples are not provided in this application one by one.

It should be further added that, because the target S-CSCF stores the user data of the target UE, or the backup device stores the identifier of the target UE and the address information of the target S-CSCF, this application is further applicable to the following scenario: The target UE has initiated a deregister procedure when the target UE is powered off or is in an airplane mode. According to the method in this application, the I-CSCF can still determine the address information of the target S-CSCF, to successfully call the target UE.

This application further provides another method for determining an S-CSCF, so that when access to UDM fails, an I-CSCF determines a target S-CSCF with which target UE is registered, to complete a register procedure of the target UE or a call procedure of the target UE.

It should be noted in advance that the method is applicable to the communication system shown in FIG. 3. Signaling interaction between the I-CSCF and the UDM needs to be performed by an SCP. For example, in the register procedure shown in FIG. 4 as an example, the I-CSCF sends the UAR message to the UDM via the SCP, and the I-CSCF receives the UAA message from the UDM via the SCP.

For another example, in the call procedure shown in FIG. 6 as an example, the I-CSCF sends the LIR message to the UDM via the SCP, and the I-CSCF receives the LIA message from the UDM via the SCP.

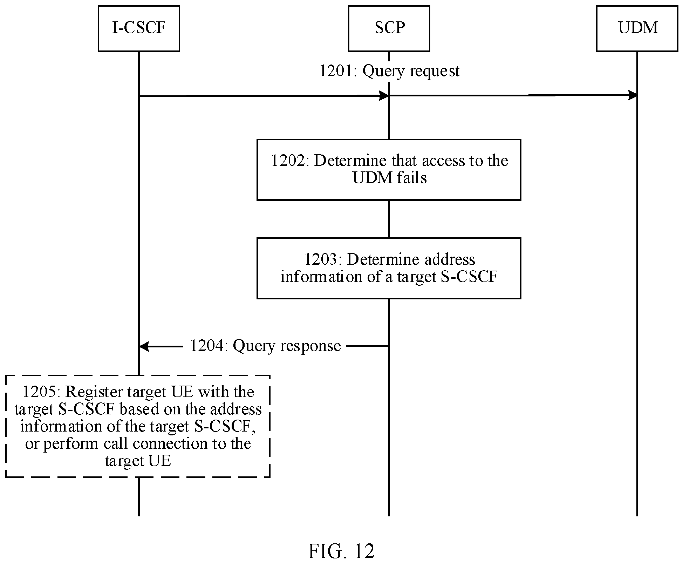

For details of the method for determining an S-CSCF, refer to the flowchart shown in FIG. 12 as an example.

Step 1201: An SCP receives a query request from an I-CSCF, and forwards the query request to UDM.

Specifically, after receiving a register message from target UE or an invite message for the target UE from calling UE, the I-CSCF may send the query request to the UDM via the SCP. For the query request, refer to the descriptions in step 701.

Step 1202: The SCP determines that access to the UDM fails.

In a case, the SCP receives a query response from the UDM, where the query response includes address information of a target S-CSCF, that is, access to the UDM is normal, so that the SCP may forward the query response to the I-CSCF. Correspondingly, the I-CSCF may perform a register (or call) procedure of the target UE based on the address information of the target S-CSCF in the query response.

In another case, if the SCP receives no query response from the UDM after preset query duration after the query request is sent to the UDM, or receives a query failure response returned by the UDM, the SCP determines that access to the UDM fails. Correspondingly, the SCP may obtain the address information of the target S-CSCF from a local storage, and send, to the I-CSCF, the query response including the address information of the target S-CSCF. For details, refer to the following step 1203 and step 1204.

Step 1203: The SCP obtains, based on an identifier of the target UE in the query request, the address information that is of the target S-CSCF and that corresponds to the identifier of the target UE from the local storage.

In this application, the SCP may locally store N2 correspondences, where N2 is an integer greater than or equal to 2. Each correspondence may include an identifier of UE and address information of an S-CSCF corresponding to the UE.

For example, in an example in Table 2, an identifier of UE 21 is represented as an identifier 21, and the identifier 21 corresponds to address information 21, that is, the UE 21 is registered with an S-CSCF corresponding to the address information 21; an identifier of UE 22 is represented as an identifier 22, and the identifier 22 corresponds to address information 22, that is, the UE 22 is registered with an S-CSCF corresponding to the address information 22; and so on.

**Table 2**

| UE identifier | S-CSCF address information |
|---|---|
| Identifier 21 | Address information 21 |
| Identifier 22 | Address information 22 |
| Identifier 23 | Address information 23 |
| ... | ... |
| Identifier N2 | Address information N2 |

Step 1204: The SCP sends a query response to the I-CSCF, where the query response includes the address information of the target S-CSCF.

Optionally, the SCP may further send a UDM access failure indication to the I-CSCF, where the UDM access failure indication may be carried in the query response, or the SCP sends the UDM access failure indication to the I-CSCF as an independent message.

With reference to the example in Table 2, if the query request includes the identifier 22, after determining that access to the UDM fails, the SCP may determine, based on the identifier 22 and the locally stored correspondences, that the address information of the target S-CSCF is the address information 22. Correspondingly, the query response sent by the SCP to the I-CSCF includes the address information 22 and the UDM access failure indication.

In a possible implementation, when access to the UDM is normal, the I-CSCF may successfully register user data of the target UE with the UDM. For a specific register procedure, refer to FIG. 4. In the register procedure, because signaling between the I-CSCF and the UDM or between the S-CSCF and the UDM needs to be forwarded by the SCP, the SCP may parse the signaling forwarded by the SCP, to obtain a correspondence between the identifier of the target UE and the address information of the target S-CSCF in the current register process from the signaling, and then store the correspondence between the identifier of the target UE and the address information of the target S-CSCF. In addition, the SCP may further update the locally stored correspondence in a next register procedure of the target UE.

Still in the example in which the target UE is the UE 22, in a register process of the UE 22, the UDM may send an SAA message to the target S-CSCF. The SAA message may include a correspondence between the identifier 22 of the UE 22 and the address information 22 of the target S-CSCF. Subsequently, the SCP may parse the SAA message to obtain the correspondence between the identifier 22 and the address information 22 from the SAA message. If the SCP determines, based on the identifier 22, that the identifier 22 and the address information corresponding to the identifier 22 do not exist in the local storage, the SCP correspondingly stores the identifier 22 and the address information 22.

Further, in a next register process of the UE 22, the SCP may parse an SAA message sent by the UDM to the target S-CSCF, to obtain a new correspondence from the SAA message, for example, obtain the identifier 22 and address information (represented as, for example, address information 22') corresponding to the identifier 22, so that the SCP may update the identifier 22 and the address information corresponding to the identifier 22 in the local storage, or it may be understood that the original address information 22 is overwritten with the address information 22'.

It may also be understood that the SCP is a backup device. When forwarding signaling between the UDM and the S-CSCF or forwarding signaling between the UDM and the I-CSCF, the backup device may obtain the correspondence between the identifier of the target UE and the address information of the target S-CSCF from the forwarded signaling, and the I-CSCF or the target S-CSCF does not need to send the correspondence to the proxy device, thereby helping reduce signaling overheads.

In this application, to ensure validity of a correspondence in the SCP, aging processing may be performed on data locally stored in the SCP. For example, if duration during which a correspondence is continuously stored in the SCP reaches preset storage duration, and the correspondence is not read or updated, the correspondence may be deleted.

Alternatively, in another possible manner, the I-CSCF may indicate, based on a deregister request of UE, the SCP to delete a correspondence that is of the UE and that is locally stored in the SCP. For example, for the target UE, the I-CSCF may receive a deregister request from the target UE; and after receiving the deregister request, send a delete instruction to the SCP after preset deregister duration expires. Correspondingly, the SCP deletes the locally stored correspondence according to the delete instruction.

In addition, the SCP may also have own backup device, and correspondingly, the SCP may synchronize the correspondences locally stored in the SCP to another backup device, thereby helping improve system stability. Alternatively, the SCP may divide the correspondences locally stored in the SCP into a plurality of groups of correspondences, and respectively store all the groups of correspondences in respective corresponding backup devices, thereby helping reduce a storage amount of each backup device.

Optionally, the I-CSCF may further perform the following step 1205.

Step 1205: The I-CSCF registers the target UE with the target S-CSCF based on the address information of the target S-CSCF, or performs call connection to the target UE.

In a possible case, after receiving a register request of the target UE, the I-CSCF may send a query request to the UDM via the SCP. The SCP determines that access to the UDM fails; and then obtains the address information of the target S-CSCF from the local storage of the SCP, and then sends, to the I-CSCF, a query response that includes the address information of the target S-CSCF. In this case, the I-CSCF may further perform a register procedure of the target UE based on the address information of the target S-CSCF. For details, refer to FIG. 4.

In addition, the I-CSCF may further send a UDM access failure indication to the target S-CSCF and/or the AS. Correspondingly, the target S-CSCF may not need to perform step 405, step 406, step 412, and step 413 in FIG. 4 based on the UDM access failure indication, and the AS may not need to perform step 502 to step 505 in FIG. 5 based on the UDM access failure indication. This helps prevent the target S-CSCF and/or the AS from performing unnecessary signaling transmission.

In another possible case, after receiving a call request for the target UE, the I-CSCF may send a query request to the UDM via the SCP. The SCP determines that access to the UDM fails; and then obtains the address information of the target S-CSCF from the local storage of the SCP, and then sends, to the I-CSCF, a query response that includes the address information of the target S-CSCF. In this case, the I-CSCF may further perform a call procedure of the target UE based on the address information of the target S-CSCF. For details, refer to FIG. 6.

In addition, the I-CSCF may further send a UDM access failure indication to the AS. Correspondingly, the AS may not need to perform step 606 and step 607 in FIG. 6 based on the UDM access failure indication. This helps prevent the AS from performing unnecessary signaling transmission.

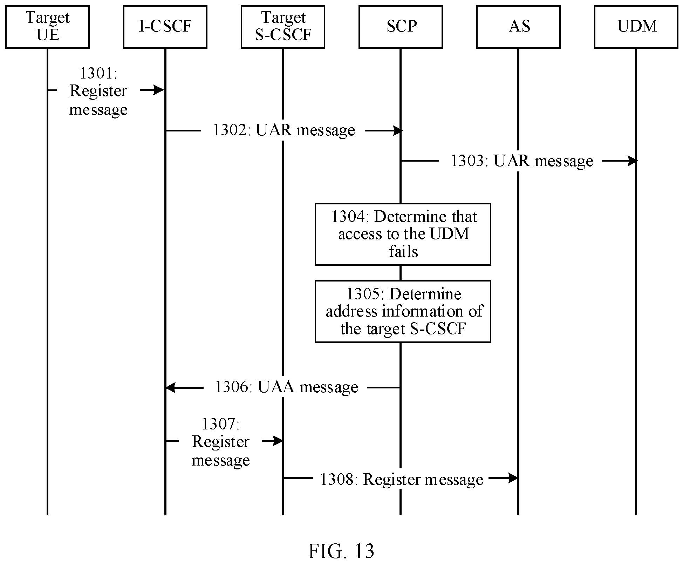

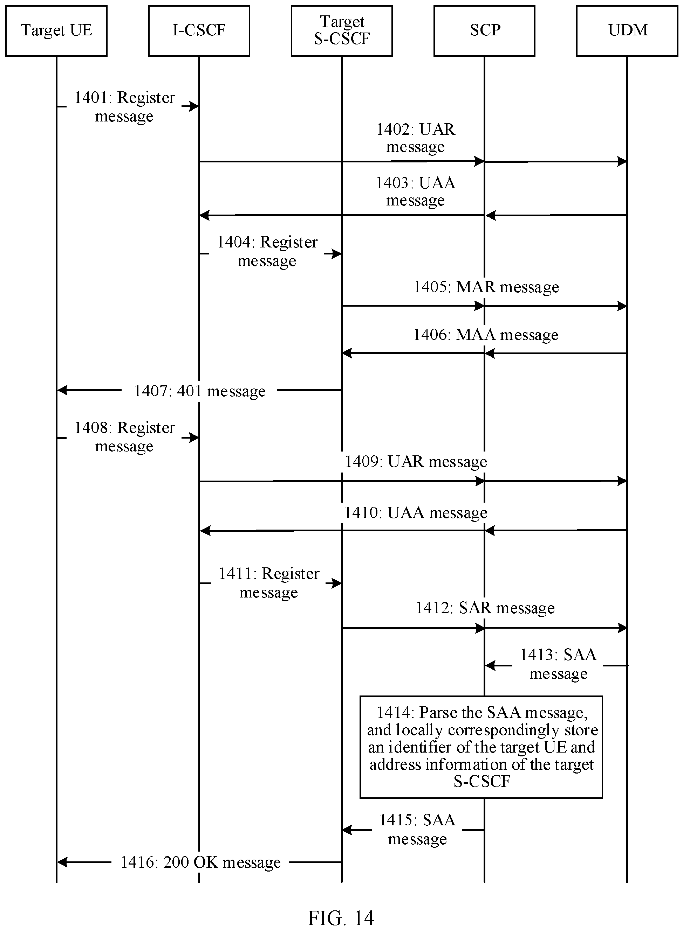

To better explain embodiments of this application, FIG. 13 and FIG. 14 respectively show implementations in two specific scenarios provided in this application.

FIG. 13 is a schematic flowchart in which an I-CSCF obtains address information of a target S-CSCF from an SCP in a register procedure.

Step 1301: Target UE sends a register message to the I-CSCF.

Step 1302: The I-CSCF sends a UAR message to the SCP based on the register message.

Step 1303: The SCP sends a UAR message to UDM.

Step 1304: The SCP determines that access to the UDM fails.

Step 1305: The SCP obtains, based on an identifier that is of the target UE and that is included in the UAR message, the address information that is of the target S-CSCF and that corresponds to the identifier of the target UE from a local storage.

Step 1306: The SCP sends a UAA message to the I-CSCF. The UAA message includes the address information of the target S-CSCF and a UDM access failure indication.

Step 1307: The I-CSCF sends a register message to the target S-CSCF based on the address information of the target S-CSCF, where the register message may include the UDM access failure indication.

Step 1308: The target S-CSCF sends a register message to an AS, where the register message may include the UDM access failure indication.

It should be noted that, for content that is not described in detail in step 1301 to step 1308, refer to the descriptions in the related embodiment in FIG. 4, FIG. 5, or FIG. 12.

It should be further added that FIG. 13 may also be applied to a procedure of calling target UE, provided that "register message" is replaced with "invite message", "UAR message" is replaced with "LIR message", and so on; and an AS receives an invite message from a target S-CSCF, and performs call connection for the target UE to an IMS domain based on a UDM access failure indication included in the invite message. For details, refer to the descriptions in the related embodiments in FIG. 6, FIG. 12, or FIG. 13.

FIG. 14 is a schematic flowchart of a scenario in which an SCP stores an identifier of target UE and address information of a target S-CSCF when access to UDM is normal.

For details of step 1401 to step 1412, refer to step 401 to step 412 in FIG. 4. An only difference lies in that in FIG. 4, the target S-CSCF directly communicates with the UDM and the I-CSCF directly communicates with the UDM, while in FIG. 14, the SCP performs forwarding. Further, in the following step 1413 to step 1416:

Step 1413: The UDM sends an SAA message to the SCP, where the SAA message carries the identifier of the target UE and the address information of the target S-CSCF.

Step 1414: The SCP parses the SAA message to obtain the identifier of the target UE and the address information of the target S-CSCF, and then locally correspondingly stores the identifier of the target UE and the address information of the target S-CSCF.

Step 1415: The SCP sends an SAA message to the target S-CSCF.

Step 1416: The target S-CSCF sends a 200 OK message to the UE.

In the foregoing technical solution, the I-CSCF sends the query request to the SCP, the SCP may forward the query request to the UDM, and if the SCP determines that access to the UDM fails, the SCP may locally obtain the address information of the target S-CSCF corresponding to the target UE, and send the address information of the target S-CSCF to the I-CSCF. Correspondingly, the I-CSCF may obtain the address information of the target S-CSCF, and perform a register procedure of the target UE or a call procedure of the target UE based on the address information of the target S-CSCF. This avoids a case in which the UE cannot be successfully registered or called when access to the UDM fails, thereby helping improve reliability of a communication system. Certainly, this application is further applicable to other scenarios in which a target S-CSCF needs to be determined. Examples are not provided in this application one by one.

It should be further added that, because the SCP stores the identifier of the target UE and the address information of the target S-CSCF, this application is further applicable to the following scenario: The target UE has initiated a deregister procedure when the target UE is powered off or is in an airplane mode. According to the method in this application, the I-CSCF can still obtain the address information of the target S-CSCF from the SCP, to successfully call the target UE.

In the foregoing embodiments, a network element or a device in a 5G communication system is used as an example for description. Certainly, the method in this application is further applicable to a 4G communication system, a 4.5G communication system, or a future communication system such as a 5.5G communication system or a 6G communication system. Correspondingly, the network element or the device in the 5G communication system may be replaced with a network element or a device in a corresponding communication system. For example, in a 4G communication system, "UDM" in the foregoing embodiments may be replaced with "HSS", and "SCP" may be replaced with "DRA". Further, a device, such as UDM or an HSS, configured to store user data (for example, subscription data or identity data) may be referred to as a data management device; a device, such as an SCP or a DRA, configured to forward signaling between the data management device and an I-CSCF or configured to forward signaling between the data management device and a target S-CSCF may be referred to as a proxy device; and UE is referred to as a terminal, and target UE is referred to as a target terminal.

It should be further noted that, although a backup device stores an identifier of a target terminal and corresponding address information of a target S-CSCF, usually, an I-CSCF obtains the address information of the target S-CSCF from the backup device only after determining that access to a data management device fails. It is explained that the backup device stores only the identifier of the target terminal and the corresponding address information of the target S-CSCF, and related data that is of the target terminal and that is stored in the backup device is less than user data that corresponds to the target terminal and that is stored in the data management device. In this application, the solution in which the I-CSCF obtains the address information of the target S-CSCF from the backup device is merely used as an emergency solution for a failure of access to the data management device, to avoid a terminal register failure or call failure.

Likewise, the description is also applicable to a solution in which a proxy device sends address information of a target S-CSCF to an I-CSCF. Specifically, the proxy device obtains the address information of the target S-CSCF from a local storage only after determining that access to a data management device fails, and then sends the address information of the target S-CSCF to the I-CSCF, so that the I-CSCF obtains the address information of the target S-CSCF, to avoid a terminal register failure or call failure.

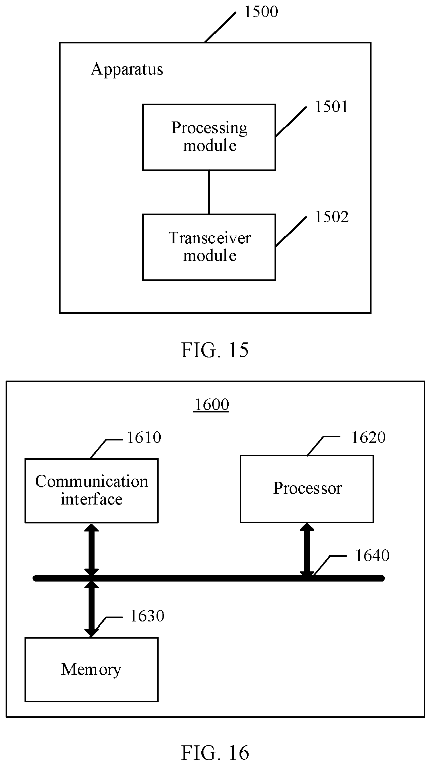

Based on the foregoing content and a same concept, FIG. 15 and FIG. 16 are schematic diagrams of structures of possible communication apparatuses according to this application. These communication apparatuses may be configured to implement the functions of the I-CSCF, the first device, or the proxy device in the foregoing method embodiments, and therefore can also implement the beneficial effects in the foregoing method embodiments.

As shown in FIG. 15, a communication apparatus 1500 includes a processing module 1501 and a transceiver module 1502. The communication apparatus 1500 is configured to implement the functions of the I-CSCF or the first device in the method embodiments shown in FIG. 7 to FIG. 11.

When the communication apparatus 1500 is configured to implement the functions of the I-CSCF in the method embodiments shown in FIG. 7 to FIG. 11:
in a possible implementation, the processing module 1501 is configured to: determine that access to a data management device fails, and control the transceiver module 1502 to send a first obtaining request to a first device; and the processing module 1501 is further configured to control the transceiver module 1502 to receive a first obtaining response of the first device, where the first obtaining response indicates address information of a target S-CSCF, and the target S-CSCF is an S-CSCF with which a target terminal is registered.

In a possible implementation, the first device is the target S-CSCF, and the target S-CSCF is any S-CSCF in an S-CSCF set; and the first obtaining response includes an indication for determining that the first device is the target S-CSCF, or includes the address information of the target S-CSCF.

In a possible implementation, the processing module 1501 is further configured to: control the transceiver module 1502 to send a second obtaining request to a second device, where the second device is another S-CSCF other than the target S-CSCF in the S-CSCF set; and control the transceiver module 1502 to receive an indication from the second device for denying that the second device is the target S-CSCF, or determine that no address information of the target S-CSCF from the second device is received.

In a possible implementation, the processing module 1501 is specifically configured to control the transceiver module 1502 to send the first obtaining request to a plurality of S-CSCFs included in the S-CSCF set; and the processing module 1501 is further specifically configured to control the transceiver module 1502 to receive the first obtaining response of the target S-CSCF in the plurality of S-CSCFs.

In a possible implementation, the processing module 1501 is further configured to: control the transceiver module 1502 to receive a response from another S-CSCF other than the target S-CSCF in the plurality of S-CSCFs for denying that the another S-CSCF is the target S-CSCF; or determine that no address information of the target S-CSCF from the another S-CSCF other than the target S-CSCF in the plurality of S-CSCFs is received.

In a possible implementation, the first device is a backup device, and an identifier of the target terminal and the address information of the target S-CSCF are correspondingly stored in the backup device.

In a possible implementation, the processing module 1501 is further configured to: when access to the data management device is normal, control the transceiver module 1502 to send the identifier of the target terminal and the address information of the target S-CSCF to the backup device.

In a possible implementation, the processing module 1501 is further configured to control the transceiver module 1502 to: after receiving a deregister request of the target terminal, send a delete instruction to the backup device after preset deregister duration expires, to instruct to delete the identifier of the target terminal and the address information of the target S-CSCF that are correspondingly stored in the backup device.

In a possible implementation, the processing module 1501 is specifically configured to: control the transceiver module 1502 to send a query request to the data management device; and after the query request is sent to the data management device, determine, within preset query duration, that no address information of the target S-CSCF from the data management device is received; or control the transceiver module 1502 to receive a query failure response of the data management device.

When the communication apparatus 1500 is configured to implement the functions of the first device in the method embodiments shown in FIG. 7 to FIG. 11:
in a possible implementation, the processing module 1501 is configured to control the transceiver module 1502 to receive a first obtaining request from an I-CSCF, where the first obtaining request indicates that access to a data management device fails; and the processing module 1501 is further configured to control, based on the first obtaining request, the transceiver module 1502 to send a first obtaining response to the I-CSCF, where the first obtaining response indicates address information of a target S-CSCF, and the target S-CSCF is an S-CSCF with which a target terminal is registered.

In a possible implementation, the apparatus 1500 is the target S-CSCF, and the processing module 1501 is specifically configured to: determine, based on an identifier of the target terminal in the first obtaining request, that user data of the target terminal is stored in the apparatus 1500, and control the transceiver module 1502 to send the first obtaining response to the I-CSCF.

In a possible implementation, the processing module 1501 is further configured to: after a deregister request of the target terminal is received, clear, after preset deregister duration expires, the user data stored in the apparatus 1500.

In a possible implementation, the apparatus 1500 is a backup device, and an identifier of the target terminal and the address information of the target S-CSCF are correspondingly stored in the apparatus 1500; and the processing module 1501 is specifically configured to control, based on the identifier of the target terminal in the first obtaining request, the transceiver module 1502 to send, to the I-CSCF, the first obtaining response that carries the address information of the target S-CSCF.

In a possible implementation, the processing module 1501 is further configured to: when access to the data management device is normal, control the transceiver module 1502 to receive the identifier of the target terminal and the address information of the target S-CSCF from the I-CSCF or the target S-CSCF; and correspondingly store the identifier of the target terminal and the address information of the target S-CSCF.

In a possible implementation, the processing module 1501 is further configured to: control the transceiver module 1502 to receive a delete instruction from the I-CSCF or the target S-CSCF; and delete, according to the delete instruction, the identifier of the target terminal and the address information of the target S-CSCF that are correspondingly stored in the apparatus 1500.

When the communication apparatus 1500 is configured to implement the functions of the proxy device in the method embodiments shown in FIG. 12 to FIG. 14, the communication apparatus 1500 is located in a communication connection between an I-CSCF and a data management device.

In a possible implementation, the processing module 1501 is configured to: determine that access to the data management device fails; and obtain address information of a target S-CSCF from a local storage, where the target S-CSCF is an S-CSCF with which a target terminal is registered; and the processing module 1501 is further configured to control the transceiver module 1502 to send the address information of the target S-CSCF to the I-CSCF.

In a possible implementation, the processing module 1501 is specifically configured to: control the transceiver module 1502 to forward a query request from the I-CSCF to the data management device; and after preset query duration expires, determine that no address information of the target S-CSCF from the data management device is received; or control the transceiver module 1502 to receive a query failure response of the data management device.

In a possible implementation, the processing module 1501 is further configured to: when access to the data management device is normal, control the transceiver module 1502 to receive an identifier of the target terminal and the address information of the target S-CSCF from the data management device; and correspondingly store the identifier of the target terminal and the address information of the target S-CSCF.

FIG. 16 shows an apparatus 1600 according to an embodiment of this application. The apparatus shown in FIG. 16 may be an implementation of a hardware circuit of the apparatus shown in FIG. 15. The apparatus is applicable to the flowcharts shown above, and perform the functions of the I-CSCF, the first device, or the proxy device in the foregoing method embodiments.

For ease of description, FIG. 16 shows only main components of the apparatus.

The apparatus 1600 shown in FIG. 16 includes a communication interface 1610, a processor 1620, and a memory 1630. The memory 1630 is configured to store program instructions and/or data. The processor 1620 may operate in cooperation with the memory 1630. The processor 1620 may execute the program instructions stored in the memory 1630. When the instructions stored in the memory 1630 are executed or a program stored in the memory 1630 is executed, the processor 1620 is configured to perform the operations performed by the processing module 1501 in the foregoing embodiment, and the communication interface 1610 is configured to perform the operations performed by the transceiver module 1502 in the foregoing embodiment.

The memory 1630 is coupled to the processor 1620. The coupling in this embodiment of this application may be an indirect coupling or a communication connection between apparatuses, units, or modules in an electrical form, a mechanical form, or another form, and is used for information exchange between the apparatuses, the units, or the modules. At least one memory 1630 may be included in the processor 1620.

In this embodiment of this application, the communication interface may be a transceiver, a circuit, a bus, a module, or a communication interface of another type. In this embodiment of this application, when the communication interface is a transceiver, the transceiver may include an independent receiver and an independent transmitter, or may be a transceiver or a communication interface integrated with sending and receiving functions.

The apparatus 1600 may further include a communication line 1640. The communication interface 1610, the processor 1620, and the memory 1630 may be connected to each other through the communication line 1640. The communication line 1640 may be a peripheral component interconnect (peripheral component interconnect, PCI for short) bus, an extended industry standard architecture (extended industry standard architecture, EISA for short) bus, or the like. The communication line 1640 may be classified as an address bus, a data bus, a control bus, or the like. For ease of representation, only one bold line is used to represent the communication line 1640 in FIG. 16, but this does not mean that there is only one bus or only one type of bus.

Based on the foregoing content and a same concept, an embodiment of this application provides a computer-readable storage medium. The computer-readable storage medium stores a computer program or instructions. When the computer program is or the instructions are executed, a computer is enabled to perform the functions of the I-CSCF, the first device, or the proxy device in the foregoing method embodiments.

Based on the foregoing content and a same concept, an embodiment of this application provides a computer program product. When a computer reads and executes the computer program product, the computer is enabled to perform the functions of the I-CSCF, the first device, or the proxy device in the foregoing method embodiments.

Based on the foregoing content and a same concept, an embodiment of this application provides a communication system. The communication system includes the I-CSCF and the first device in the related method embodiments in FIG. 7 to FIG. 11. The first device may be a target S-CSCF or a backup device.

Based on the foregoing content and a same concept, an embodiment of this application further provides a communication system. The communication system includes the I-CSCF and the proxy device in the related method embodiments in FIG. 12 to FIG. 14.

It may be understood that various numbers in embodiments of this application are merely used for differentiation for ease of description, and are not used to limit the scope of embodiments of this application. The sequence numbers of the foregoing processes do not mean execution sequences, and the execution sequences of the processes should be determined based on functions and internal logic of the processes.

It is clear that a person skilled in the art can make various modifications and variations to this application without departing from the protection scope of this application. In this way, this application is also intended to cover these modifications and variations to this application provided that they fall within the scope of the claims of this application and equivalent technologies thereof.

## Claims

1. A method for determining a serving-call session control function S-CSCF, comprising:
determining, by an interrogation-call session control function I-CSCF, that access to a data management device fails, and sending a first obtaining request to a first device; and
receiving, by the I-CSCF, a first obtaining response of the first device, wherein
the first obtaining response indicates address information of a target S-CSCF, and the target S-CSCF is an S-CSCF with which a target terminal is registered.

2. The method according to claim 1, wherein the first device is the target S-CSCF, and the target S-CSCF is any S-CSCF in an S-CSCF set corresponding to the I-CSCF; and
the first obtaining response comprises an indication for determining that the first device is the target S-CSCF, or comprises the address information of the target S-CSCF.

3. The method according to claim 1 or 2, further comprising:
sending, by the I-CSCF, a second obtaining request to a second device, wherein the second device is another S-CSCF other than the target S-CSCF in the S-CSCF set corresponding to the I-CSCF; and
receiving, by the I-CSCF, an indication from the second device for denying that the second device is the target S-CSCF; or receiving, by the I-CSCF, no address information of the target S-CSCF from the second device.

4. The method according to any one of claims 1 to 3, wherein the sending, by the I-CSCF, a first obtaining request to a first device comprises:
sending, by the I-CSCF, the first obtaining request to a plurality of S-CSCFs comprised in the S-CSCF set; and
the receiving, by the I-CSCF, a first obtaining response of the first device comprises:
receiving, by the I-CSCF, the first obtaining response of the target S-CSCF in the plurality of S-CSCFs.

5. The method according to claim 4, further comprising:
receiving, by the I-CSCF, a response from another S-CSCF other than the target S-CSCF in the plurality of S-CSCFs for denying that the another S-CSCF is the target S-CSCF; or
receiving, by the I-CSCF, no address information of the target S-CSCF from the another S-CSCF other than the target S-CSCF in the plurality of S-CSCFs.

6. The method according to claim 1, wherein the first device is a backup device, and an identifier of the target terminal and the address information of the target S-CSCF are correspondingly stored in the backup device.

7. The method according to claim 6, further comprising:
when access to the data management device is normal, sending, by the I-CSCF, the identifier of the target terminal and the address information of the target S-CSCF to the backup device.

8. The method according to claim 6 or 7, further comprising:
after receiving a deregister request of the target terminal, sending, by the I-CSCF, a delete instruction to the backup device after preset deregister duration expires, to instruct to delete the identifier of the target terminal and the address information of the target S-CSCF that are correspondingly stored in the backup device.

9. The method according to any one of claims 1 to 8, wherein the determining, by an I-CSCF, that access to a data management device fails comprises:
sending, by the I-CSCF, a query request to the data management device; and
after sending the query request to the data management device, determining, by the I-CSCF within preset query duration, that no address information of the target S-CSCF from the data management device is received; or
receiving, by the I-CSCF, a query failure response of the data management device.

10. A method for determining a serving-call session control function S-CSCF, comprising:
receiving, by a first device, a first obtaining request from an interrogation-call session control function I-CSCF, wherein the first obtaining request indicates that access to a data management device fails; and
sending, by the first device, a first obtaining response to the I-CSCF based on the first obtaining request, wherein
the first obtaining response indicates address information of a target S-CSCF, and the target S-CSCF is an S-CSCF with which a target terminal is registered.

11. The method according to claim 10, wherein the first device is the target S-CSCF; and the sending, by the first device, a first obtaining response to the I-CSCF based on the first obtaining request comprises:
determining, by the first device based on an identifier of the target terminal in the first obtaining request, that user data of the target terminal is stored in the first device, and sending the first obtaining response to the I-CSCF.

12. The method according to claim 10 or 11, further comprising:
after receiving a deregister request of the target terminal, clearing, by the first device after preset deregister duration expires, the user data that is of the target terminal and that is stored in the first device.

13. The method according to claim 10, wherein the first device is a backup device, and an identifier of the target terminal and the address information of the target S-CSCF are correspondingly stored in the backup device; and
the sending, by the first device, a first obtaining response to the I-CSCF based on the first obtaining request comprises:
sending, by the first device to the I-CSCF based on the identifier of the target terminal in the first obtaining request, the first obtaining response that carries the address information of the target S-CSCF.

14. The method according to claim 10 or 13, further comprising:
when access to the data management device is normal, receiving, by the first device, the identifier of the target terminal and the address information of the target S-CSCF from the I-CSCF or the target S-CSCF; and
correspondingly storing, by the first device, the identifier of the target terminal and the address information of the target S-CSCF.

15. The method according to any one of claims 10, 13, and 14, further comprising:
receiving, by the first device, a delete instruction from the I-CSCF or the target S-CSCF; and
deleting, by the first device according to the delete instruction, the identifier of the target terminal and the address information of the target S-CSCF that are correspondingly stored in the first device.

16. A method for determining a serving-call session control function S-CSCF, wherein the method is applicable to a system comprising a proxy device, and the proxy device is located in a communication connection between an interrogation-call session control function I-CSCF and a data management device; and
the method comprises:
determining, by the proxy device, that access to the data management device fails;
obtaining, by the proxy device, address information of a target S-CSCF from a local storage, wherein the target S-CSCF is an S-CSCF with which a target terminal is registered; and
sending, by the proxy device, the address information of the target S-CSCF to the I-CSCF.

17. The method according to claim 16, wherein the determining, by the proxy device, that access to the data management device fails comprises:
forwarding, by the proxy device, a query request from the I-CSCF to the data management device; and
after preset query duration expires, determining, by the proxy device, that no address information of the target S-CSCF from the data management device is received; or
receiving, by the proxy device, a query failure response of the data management device.

18. The method according to claim 16 or 17, further comprising:
when access to the data management device is normal, receiving, by the proxy device, an identifier of the target terminal and the address information of the target S-CSCF from the data management device; and
correspondingly storing, by the proxy device, the identifier of the target terminal and the address information of the target S-CSCF.

19. An apparatus for determining a serving-call session control function S-CSCF, comprising:
a processing module, configured to: determine that access to a data management device fails, and control a transceiver module to send a first obtaining request to a first device, wherein
the processing module is further configured to control the transceiver module to receive a first obtaining response of the first device, wherein
the first obtaining response indicates address information of a target S-CSCF, and the target S-CSCF is an S-CSCF with which a target terminal is registered.

20. The apparatus according to claim 19, wherein the first device is the target S-CSCF, and the target S-CSCF is any S-CSCF in an S-CSCF set corresponding to the apparatus; and
the first obtaining response comprises an indication for determining that the first device is the target S-CSCF, or comprises the address information of the target S-CSCF.

21. The apparatus according to claim 19 or 20, wherein the processing module is further configured to:
control the transceiver module to send a second obtaining request to a second device, wherein the second device is another S-CSCF other than the target S-CSCF in the S-CSCF set corresponding to the apparatus; and
control the transceiver module to receive an indication from the second device for denying that the second device is the target S-CSCF; or determine that no address information of the target S-CSCF from the second device is received.

22. The apparatus according to any one of claims 19 to 21, wherein the processing module is specifically configured to:
control the transceiver module to send the first obtaining request to a plurality of S-CSCFs comprised in the S-CSCF set; and
the processing module is further specifically configured to:
control the transceiver module to receive the first obtaining response of the target S-CSCF in the plurality of S-CSCFs.

23. The apparatus according to claim 22, wherein the processing module is further configured to:
control the transceiver module to receive an indication from another S-CSCF other than the target S-CSCF in the plurality of S-CSCFs for denying that the another S-CSCF is the target S-CSCF; or
determine that no address information of the target S-CSCF from the another S-CSCF other than the target S-CSCF in the plurality of S-CSCFs is received.

24. The apparatus according to claim 19, wherein the first device is a backup device, and an identifier of the target terminal and the address information of the target S-CSCF are correspondingly stored in the backup device.

25. The apparatus according to claim 24, wherein the processing module is further configured to:
when access to the data management device is normal, control the transceiver module to send the identifier of the target terminal and the address information of the target S-CSCF to the backup device.

26. The apparatus according to claim 24 or 25, wherein the processing module is further configured to:
control the transceiver module to: after receiving a deregister request of the target terminal, send a delete instruction to the backup device after preset deregister duration expires, to instruct to delete the identifier of the target terminal and the address information of the target S-CSCF that are correspondingly stored in the backup device.

27. The apparatus according to any one of claims 19 to 26, wherein the processing module is specifically configured to:
control the transceiver module to send a query request to the data management device; and
after the query request is sent to the data management device, determine that no address information of the target S-CSCF from the data management device is received within preset query duration; or control the transceiver module to receive a query failure response of the data management device.

28. An apparatus for determining a serving-call session control function S-CSCF, comprising:
a processing module, configured to control a transceiver module to receive a first obtaining request from an interrogation-call session control function I-CSCF, wherein the first obtaining request indicates that access to a data management device fails, wherein
the processing module is further configured to control, based on the first obtaining request, the transceiver module to send a first obtaining response to the I-CSCF, wherein
the first obtaining response indicates address information of a target S-CSCF, and the target S-CSCF is an S-CSCF with which a target terminal is registered.

29. The apparatus according to claim 28, wherein the apparatus is the target S-CSCF, and the processing module is specifically configured to:
determine, based on an identifier of the target terminal in the first obtaining request, that user data of the target terminal is stored in the apparatus, and control the transceiver module to send the first obtaining response to the I-CSCF.

30. The apparatus according to claim 28 or 29, wherein the processing module is further configured to:
after a deregister request of the target terminal is received, clear, after preset deregister duration expires, the user data stored in the apparatus.

31. The apparatus according to claim 28, wherein the apparatus is a backup device, and an identifier of the target terminal and the address information of the target S-CSCF are correspondingly stored in the backup device; and
the processing module is specifically configured to:
control, based on the identifier of the target terminal in the first obtaining request, the transceiver module to send, to the I-CSCF, the first obtaining response that carries the address information of the target S-CSCF.

32. The apparatus according to claim 28 or 31, wherein the processing module is further configured to:
when access to the data management device is normal, control the transceiver module to receive the identifier of the target terminal and the address information of the target S-CSCF from the I-CSCF or the target S-CSCF; and
correspondingly store the identifier of the target terminal and the address information of the target S-CSCF.

33. The apparatus according to any one of claims 28, 31, and 32, wherein the processing module is further configured to:
control the transceiver module to receive a delete instruction from the I-CSCF or the target S-CSCF; and
delete, according to the delete instruction, the identifier of the target terminal and the address information of the target S-CSCF that are correspondingly stored in the apparatus.

34. An apparatus for determining a serving-call session control function S-CSCF, wherein the apparatus is applicable to a system comprising a proxy device, and the proxy device is located in a communication connection between an interrogation-call session control function I-CSCF and a data management device; and
the apparatus comprises:
a processing module, configured to: determine that access to the data management device fails; and obtain address information of a target S-CSCF from a local storage, wherein the target S-CSCF is an S-CSCF with which a target terminal is registered, wherein
the processing module is further configured to control a transceiver module to send the address information of the target S-CSCF to the I-CSCF.

35. The apparatus according to claim 34, wherein the processing module is specifically configured to:
control the transceiver module to forward a query request from the I-CSCF to the data management device; and
after preset query duration expires, determine that no address information of the target S-CSCF from the data management device is received; or control the transceiver module to receive a query failure response of the data management device.

36. The apparatus according to claim 34 or 35, wherein the processing module is further configured to:
when access to the data management device is normal, control the transceiver module to receive an identifier of the target terminal and the address information of the target S-CSCF from the data management device; and
correspondingly store the identifier of the target terminal and the address information of the target S-CSCF.

37. A communication apparatus, comprising a processor, wherein the processor is connected to a memory, the memory is configured to store a computer program, and the processor is configured to execute the computer program stored in the memory, to enable the communication apparatus to perform the method according to any one of claims 1 to 9, enable the communication apparatus to perform the method according to any one of claims 10 to 15, or enable the communication apparatus to perform the method according to any one of claims 16 to 18.

38. A computer-readable storage medium, wherein the computer-readable storage medium stores a computer program or instructions, and when the computer program is or the instructions are executed by a communication apparatus, the method according to any one of claims 1 to 9 is implemented, the method according to any one of claims 10 to 15 is implemented, or the method according to any one of claims 16 to 18 is implemented.

39. A computer program product, wherein the computer program product comprises a computer program or instructions, and when the computer program is or the instructions are executed by a communication apparatus, the method according to any one of claims 1 to 9 is implemented, the method according to any one of claims 10 to 15 is implemented, or the method according to any one of claims 16 to 18 is implemented.

40. A method for determining a serving-call session control function S-CSCF, comprising:
determining, by an interrogation-call session control function I-CSCF, that access to a data management device fails, and sending a first obtaining request to a first device; and
sending, by the first device, a first obtaining response to the I-CSCF, wherein
the first obtaining response indicates address information of a target S-CSCF, and the target S-CSCF is an S-CSCF with which a target terminal is registered.

41. A method for determining a serving-call session control function S-CSCF, comprising:
determining, by a proxy device, that access to a data management device fails;
obtaining, by the proxy device, address information of a target S-CSCF from a local storage, wherein the target S-CSCF is an S-CSCF with which a target terminal is registered; and
receiving, by an interrogation-call session control function I-CSCF, the address information of the target S-CSCF.
